# EUROPEAN PATENT SPECIFICATION

(11) **EP 2 832 422 B1**
(45) Date of publication and mention of the grant of the patent: **02.05.2018**
(21) Application number: 12872988.6
(22) Date of filing: 30.03.2012
(51) Int. Cl.: B01D 53/86

(54) **METHOD FOR MANUFACTURING A HEAT RECOVERY DEVICE**
VERFAHREN ZUR HERSTELLUNG EINER WÄRMERÜCKGEWINNUNGSVORRICHTUNG
PROCÉDÉ DE FABRICATION D'UN DISPOSITIF DE RÉCUPÉRATION DE CHALEUR

(43) Date of publication of application: 04.02.2015
(73) Proprietor: Mitsubishi Hitachi Power Systems, Ltd., Yokohama 220-8401 (JP)
(72) Inventor: MIYANISHI, Hideo, Tokyo 108-8215 (JP); HASEGAWA, Hiroyuki, Tokyo 108-8215 (JP)
(74) Representative: Studio Torta S.p.A.
(86) International application number: PCT/JP2012/058564
(87) International publication number: WO 2013/145256

(56) References cited:
- WO-A1-01/10539
- DE-C1- 3 610 457
- JP-A- H10 267 206
- JP-A- S62 225 230
- JP-A- 2002 292 244
- JP-A- 2003 314 801
- JP-A- 2007 152 204
- JP-U- S5 823 623
- US-A- 4 322 386
- US-A- 4 879 099

## Description

### Technical Field

The present invention relates to a heat recovery device manufacturing method and a denitration device installation method.

### Background Art

Conventionally, a heat recovery device is known which recovers heat from gas exhausted from a combustion engine such as a gas turbine. For example, PTL 1 discloses an exhaust heat recovery boiler which has an upper heat transfer tube bank and a lower heat transfer tube bank for recovering heat from gas exhausted from a gas turbine. A denitration device pre-installed between the upper heat transfer tube bank and the lower heat transfer tube bank allows the exhaust heat recovery boiler described in PTL 1 to recover heat from gas containing nitrogen oxides as well as to decompose the nitrogen oxides contained in the gas.

While some heat recovery devices, like the exhaust heat recovery boiler described in PTL 1, are equipped with a pre-installed denitration device, other heat recovery devices are unequipped with the denitration device. The heat recovery devices unequipped with the denitration device exhaust gas containing nitrogen oxides directly into the atmosphere, causing harmful effects on the atmospheric environment. There is a desire to newly add a denitration device to a heat recovery device unequipped with the denitration device, in order to prevent such harmful effects on the atmospheric environment.

### Citation List

### Patent Literature

{PTL 1} Japanese Unexamined Patent Application, Publication No. Hei 10-267206

### {Summary of Invention}

### {Technical Problem}

However, newly adding a denitration device to a heat recovery device unequipped with the denitration device requires a major modification of the heat recovery device, such as reassembling the heat recovery device after disassembling the entire heat recovery device.

Having been made in view of these circumstances, the present invention aims to provide a heat recovery device manufacturing method which, even when a heat recovery device which recovers heat from gas containing nitrogen oxides is unequipped with a denitration device for decomposing nitrogen oxides, can install the denitration device in the heat recovery device without the need for a major modification.

In order to solve the above problem, the present invention has adopted the following solutions:
A heat recovery device manufacturing method according to the present invention is a manufacturing method for manufacturing the heat recovery device in which a denitration device, which includes a plurality of catalyst members for decomposing nitrogen oxides, is installed and which recovers heat from gas containing nitrogen oxides, wherein the heat recovery device includes: a heat recovery part for recovering heat from the gas; and a first opening/closing part which can be opened and closed to carry the catalyst members from the outside of the heat recovery device to the inside of the heat recovery device where the heat recovery part is installed. The manufacturing method includes: a first carry-in step of carrying a plurality of support members for supporting the catalyst members through the first opening/closing part to the inside; a first installation step of installing the plurality of support members, which are carried to the inside in the first carry-in step, at positions where the heat recovery part is not installed inside the heat recovery device; a second carry-in step of carrying the plurality of catalyst members through the first opening/closing part to the inside; and a second installation step of installing the plurality of catalyst members, which are carried to the inside in the second carry-in step, at positions on the support members which are installed in the first installation step.

In the heat recovery device manufacturing method according to the present invention, the plurality of support members for supporting the plurality of catalyst members are carried to the inside through the first opening/closing part for carry-in to the inside of the heat recovery device, and the plurality of support members carried to the inside are installed at positions where the heat recovery part is not installed inside the heat recovery device, and then the plurality of catalyst members are carried to the inside through the first opening/closing part, and the plurality of catalyst members carried to the inside are installed on the plurality of support members. In this way, it is possible, without involving a major modification of the heat recovery device, to carry the plurality of catalyst members to the inside and install them using the first opening/closing part for carrying the plurality of catalyst members to the inside of the heat recovery device. Thus, it is possible to provide a heat recovery device manufacturing method which can install a plurality of catalyst members in a heat recovery device without the need for a major modification.

In a heat recovery device manufacturing method of a first aspect of the present invention, the heat recovery device further includes a second opening/closing part which can be opened and closed for carry-in from the outside of the heat recovery device to the inside of the heat recovery device, the second opening/closing part being provided on the upstream side of the first opening/closing part in a circulation direction of the gas, and the manufacturing method further includes: a third carry-in step of carrying a plurality of blow-in members, which blow in a reducing agent for reducing the gas passing through the plurality of catalyst members, to the inside through the second opening/closing part; and a third installation step of installing the plurality of blow-in members, which are carried to the inside in the third carry-in step, on the upstream side of the plurality of catalyst members, which are installed in the second installation step, in the circulation direction of the gas.

In the heat recovery device manufacturing method of the first aspect of the present invention, the plurality of blow-in members which blow in the reducing agent for reducing the gas passing through the plurality of catalyst members are carried to the inside through the second opening/closing part for carry-in to the inside of the heat recovery device, and the plurality of blow-in members carried to the inside are installed on the upstream side of the plurality of catalyst members in the circulation direction of the gas. In this way, it is possible, without involving a major modification of the heat recovery device, to carry to the inside the plurality of blow-in members and install them using the second opening/closing part for carry-in to the inside of the heat recovery device. Thus, it is possible to provide a heat recovery device manufacturing method which can install a plurality of catalyst members and blow-in members for a reducing agent in a heat recovery device without the need for a major modification.

In a heat recovery device manufacturing method of a second aspect of the present invention, the support member is a member of which a lower surface and an upper surface are parallel to each other in cross-section and which has a vertical part connecting the lower surface and the upper surface; the catalyst member has a predetermined width in the width direction; in the first installation step, the plurality of support members are installed at intervals such that the interval between the vertical parts of the plurality of support members adjacent to each other in the width direction in the main body of the heat recovery device is equal to the predetermined width of the catalyst member; and in the second installation step, the plurality of catalyst members are installed such that one of the plurality of catalyst members bridges the interval between two of the plurality of support members installed adjacent to each other at the interval of the predetermined width.

In the heat recovery device manufacturing method of the second aspect of the present invention, the catalyst member has a predetermined width in the width direction, and the support members, of which the lower surface and the upper surface are parallel to each other in cross-section and which have the vertical part connecting the lower surface and the upper surface, are installed at intervals such that the interval between the vertical parts of the plurality of adjacent support members is equal to the predetermined width, and then the catalyst members are installed such that one of the catalyst members bridges the interval between two of the support members installed adjacent to each other at the interval of the predetermined width. In this way, the support members are appropriately disposed at the intervals of the predetermined width in order to support the catalyst members having the predetermined width. Thus, it is possible to provide a heat recovery device manufacturing method which can appropriately install the support members for supporting the catalyst members having the predetermined width.

In a heat recovery device manufacturing method of a third aspect of the present invention, the heat recovery part includes: a first heat transfer tube; a second heat transfer tube installed on the upstream side of the first heat transfer tube in the circulation direction of the gas; and a third heat transfer tube installed on the upstream side of the second heat transfer tube in the circulation direction of the gas. In the manufacturing method, the first carry-in step is a step of carrying the plurality of support members to the inside through the first opening/closing part provided at a first position which is located between the first heat transfer tube and the second heat transfer tube in the circulation direction of the gas; the second carry-in step is a step of carrying the plurality of catalyst members to the inside through the first opening/closing part provided at the first position which is located between the first heat transfer tube and the second heat transfer tube in the circulation direction of the gas; and the third carry-in step is a step of carrying the plurality of blow-in members to the inside through the second opening/closing part provided at a second position which is located between the second heat transfer tube and the third heat transfer tube in the circulation direction of the gas.

In the heat recovery device manufacturing method of the third aspect of the present invention, the plurality of support members and the plurality of catalyst members are carried to the inside through the first opening/closing part provided at the first position, which is located between the first heat transfer tube and the second heat transfer tube installed on the upstream side of the first heat transfer tube in the circulation direction of the gas, and the plurality of support members and the plurality of catalyst members are installed at the first position, and then the plurality of blow-in members are carried to the inside through the second opening/closing part provided at the second position, which is located between the second heat transfer tube and the third heat transfer tube installed on the upstream side of the second heat transfer tube in the circulation direction of the gas, and the plurality of blow-in members are installed at the second position. In this way, it is possible to install the plurality of catalyst members at an appropriate position between the first heat transfer tube and the second heat transfer tube, and to install the plurality of blow-in members at an appropriate position between the second heat transfer tube and the third heat transfer tube. Thus, it is possible to provide a heat recovery device manufacturing method which can install a plurality of catalyst members and a plurality of blow-in members for a reducing agent in a heat recovery device without the need for a major modification.

In the heat recovery device manufacturing method of the first aspect or the third aspect of the present invention, the plurality of blow-in members are pipe-like members constituting a passage for circulating the reducing agent, and the third installation step is a step of forming the passage by connecting the plurality of blow-in members. In this way, the plurality of blow-in members, which are pipe members, are carried to the inside through the second opening/closing part, and these blow-in members are connected to form the passage for circulating the reducing agent. Thus, it is possible to form a passage for circulating a reducing agent in a heat recovery device without the need for a major modification.

In a heat recovery device manufacturing method of a fourth aspect of the present invention, the manufacturing method installs the plurality of catalyst members by alternately repeating the first carry-in step and the first installation step performed on one of the plurality of support members, and the second carry-in step and the second installation step performed on one of the plurality of catalyst members. In this way, the steps of carrying to the inside and installing one support member, and the steps of carrying to the inside and installing one catalyst member are alternately repeated. Thus, compared with the case where all the support members are carried to the inside and installed and thereafter all the catalyst members are carried to the inside and installed, the plurality of support members which are already installed do not interfere with installation of new catalyst members, so that installation of the plurality of catalyst members is facilitated.

In a heat recovery device manufacturing method of a fifth aspect of the present invention, to allow the gas to circulate inside the heat recovery device from the lower side to the upper side, the first installation step is a step of installing the plurality of support members on a plane perpendicular to the circulation direction of the gas, and the second installation step is a step of installing the plurality of catalyst members on a plane perpendicular to the circulation direction of the gas. In this way, the plurality of catalyst members are installed on a plane perpendicular to the circulation direction of the gas. Thus, it is possible to dispose the plurality of catalyst members at positions suitable for decomposing the gas containing nitrogen oxides.

In a heat recovery device manufacturing method of a sixth aspect of the present invention, the manufacturing method further includes: a step of carrying a plurality of mounting members for constituting a mounting base, on which the plurality of support members installed in the first installation step are installed, through the first opening/closing part to the inside; and a step of installing the mounting base using the plurality of mounting members which are carried to the inside in the above step. In this way, the mounting base on which the plurality of support members are mounted is installed using the first opening/closing part for carry-in to the inside of the heat recovery device. Thus, it is possible to provide a heat recovery device manufacturing method which, even when the heat recovery device is unequipped with a mechanism for mounting support members, can install a plurality of catalyst members in the heat recovery device without the need for a major modification.

In a heat recovery device manufacturing method of a seventh aspect of the present invention, the mounting base is constituted using a member, of which a lower surface and an upper surface are parallel to each other in cross-section and which has a vertical part connecting the lower surface and the upper surface, as the mounting member. In this way, it is possible to provide a heat recovery device manufacturing method which can install a plurality of catalyst members in a heat recovery device using a member, of which the lower surface and the upper surface are parallel to each other in cross-section and which has a vertical part connecting the lower surface and the upper surface.

In a heat recovery device manufacturing method of an eighth aspect of the present invention, the first opening/closing part is an opening/closing part which is pre-installed in the heat recovery device. In this way, it is possible to provide a heat recovery device manufacturing method which can install a plurality of catalyst members in a heat recovery device, without the need for the modification of newly installing a first opening/closing part for carry-in of a plurality of support members and a plurality of catalyst members in the heat recovery device.

A heat recovery device manufacturing method of a ninth aspect of the present invention further includes a step of installing the first opening/closing part on an outer wall surface of the heat recovery device. In this way, it is possible to provide a heat recovery device manufacturing method which can install a plurality of catalyst members in a heat recovery device without the need for a major modification.

A denitration device installation method not according to the present invention is an installation method for installing a denitration device, which includes a plurality of catalyst members for decomposing nitrogen oxides, in a heat recovery device which recovers heat from gas containing nitrogen oxides, wherein the heat recovery device includes: a heat recovery part for recovering heat from the gas; and a first opening/closing part which can be opened and closed to carry the catalyst members from the outside of the heat recovery device to the inside of the heat recovery device where the heat recovery part is installed. The installation method includes: a first carry-in step of carrying a plurality of support members for supporting the catalyst members through the first opening/closing part to the inside; a first installation step of installing the plurality of support members, which are carried to the inside in the first carry-in step, at positions where the heat recovery part is not installed inside the heat recovery device; a second carry-in step of carrying the plurality of catalyst members through the first opening/closing part to the inside; and a second installation step of installing the plurality of catalyst members, which are carried to the inside in the second carry-in step, at positions on the support members which are installed in the first installation step.

A heat recovery device used in the present invention is a heat recovery device which recovers heat from gas containing nitrogen oxides, wherein a plurality of catalyst members for decomposing the nitrogen oxides are installed by any one of the above-described denitration device installation methods. According to the heat recovery device manufacturing method of the present invention, it is possible, without the need for a major modification, to provide a heat recovery device in which a denitration device is installed.

### {Advantageous Effects of Invention}

According to the heat recovery device manufacturing method of the present invention, it is possible, without involving a major modification of a heat recovery device, to carry the plurality of catalyst members to the inside and install them using the first opening/closing part for carry-in to the inside of the heat recovery device. Thus, it is possible to provide a heat recovery device manufacturing method which can install catalyst members in a heat recovery device without the need for a major modification.

### {Brief Description of Drawings}

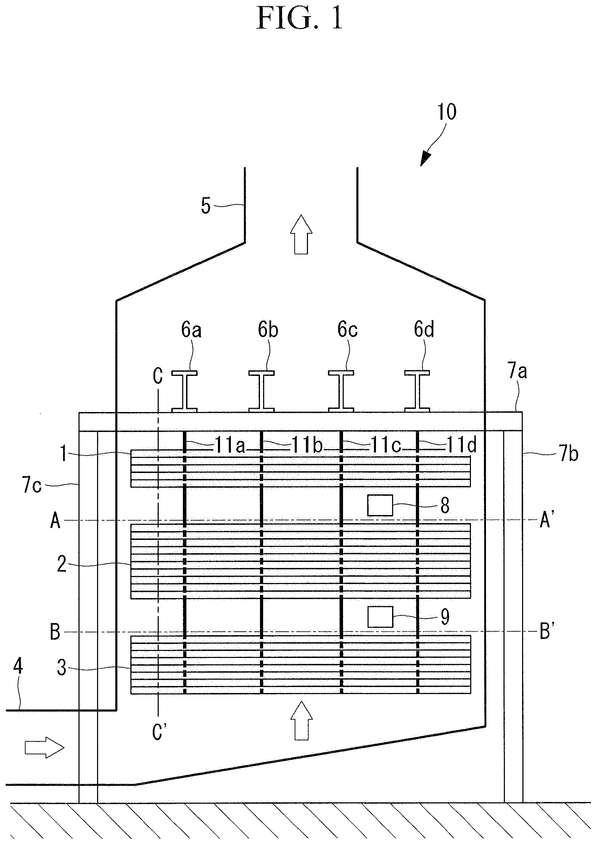

{Fig. 1}
   Fig. 1 is a cross-sectional side view of an exhaust heat recovery boiler of a first embodiment (before installation of a catalyst system).
{Fig. 2}
   Fig. 2 is a cross-sectional side view of the exhaust heat recovery boiler of the first embodiment (after installation of the catalyst system).
{Fig. 3}
   Fig. 3 is a view showing a state where a support beam is being carried to the inside through a first opening/closing gate.
{Fig. 4}
   Fig. 4 is a view showing a state where a catalyst pack is being carried to the inside through the first opening/closing gate.
{Fig. 5}
   Fig. 5 is a perspective view of the cross-section along the line A-A' of Fig. 1 showing a state where a mounting base, on which the support beam is mounted, is installed.
{Fig. 6}
   Fig. 6 is a view showing a carry-in step and an installation step of a support member of the first embodiment.
{Fig. 7}
   Fig. 7 is a view showing the carry-in step and the installation step of the support member of the first embodiment.
{Fig. 8}
   Fig. 8 is a view showing the carry-in step and the installation step of the support member of the first embodiment.
{Fig. 9}
   Fig. 9 is a view showing a carry-in step and an installation step of a catalyst member of the first embodiment.
{Fig. 10}
   Fig. 10 is a view showing the carry-in step and the installation step of the catalyst member of the first embodiment.
{Fig. 11}
   Fig. 11 is a view showing a carry-in step and an installation step of a blow-in member of the first embodiment.
{Fig. 12}
   Fig. 12 is a view showing the carry-in step and the installation step of the blow-in member of the first embodiment.
{Fig. 13}
   Fig. 13 is a flowchart showing a denitration device installation method of the first embodiment.
{Fig. 14}
   Fig. 14 is a view showing a carry-in step and an installation step of a catalyst member of another embodiment.
{Fig. 15}
   Fig. 15 is a view showing the carry-in step and the installation step of the catalyst member of the other embodiment.
{Fig. 16}
   Fig. 16 is a cross-sectional view along the line C-C' of Fig. 1.
{Fig. 17}
   Fig. 17 is a view in the direction of the arrow D of Fig. 16.
{Fig. 18}
   Fig. 18 is a view showing an installed state of a support beam of a second embodiment.
{Fig. 19}
   Fig. 19 is a perspective view of the cross-section along the line A-A' of Fig. 1 showing a state where a mounting base of the second embodiment is installed.
{Fig. 20}
   Fig. 20 is a view showing an installed state of an ammonia injection pipe of a third embodiment.
{Fig. 21}
   Fig. 21 is a view showing an installed state of a support beam and an ammonia injection pipe of a fourth embodiment.
{Fig. 22}
   Fig. 22 is a perspective view of the cross-section along the line A-A' of Fig. 1 showing a state where a mounting base of a fifth embodiment is installed.

### Description of Embodiments

### First Embodiment

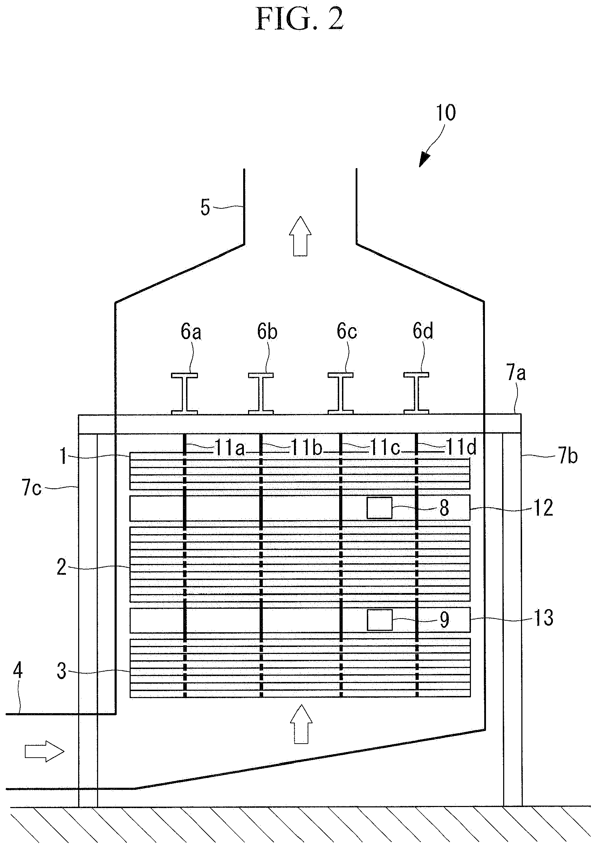

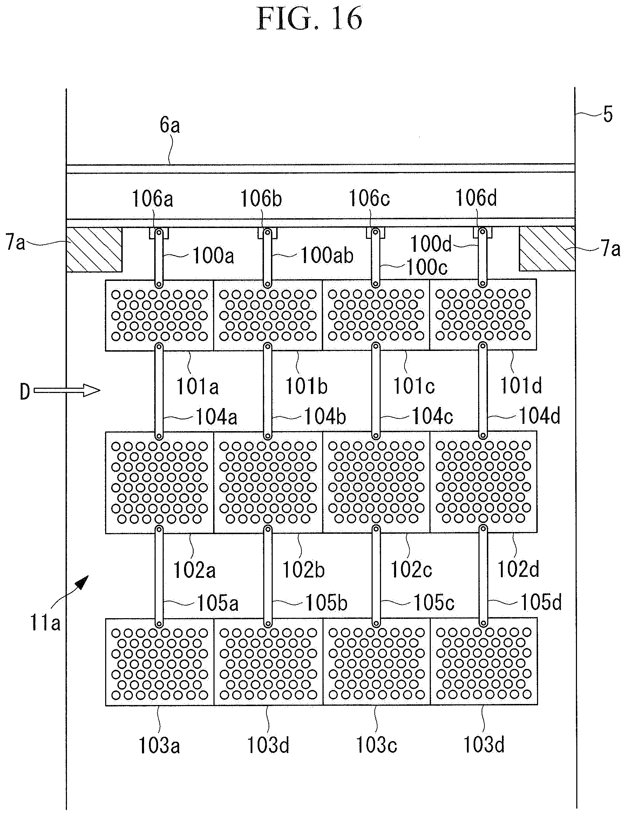

In the following, an exhaust heat recovery boiler (heat recovery device) of a first embodiment will be described using Fig. 1, Fig. 2, and Fig. 16. Fig. 1 is a cross-sectional side view of the exhaust heat recovery boiler before a catalyst system and a reducing agent injection system are installed by a denitration device installation method of the first embodiment. Fig. 2 is a cross-sectional side view of the exhaust heat recovery boiler after the catalyst system and the reducing agent injection system are installed by the denitration device installation method of the first embodiment. Components with the same reference sign in Fig. 1 and Fig. 2 have the same configuration. The arrows in Fig. 1 and Fig. 2 indicate the circulation direction of exhaust gas. Fig. 16 is a cross-sectional view along the line C-C' of Fig. 1.

An exhaust heat recovery boiler 10 of the first embodiment is a device which sucks in high-temperature exhaust gas generated by combustion in a gas turbine (not shown) through an inlet duct 4 and recovers heat from the exhaust gas before discharging it to an outlet duct 5. The exhaust heat recovery boiler 10 of the first embodiment is a vertical exhaust heat recovery boiler which discharges the exhaust gas, which inflows from the lower side (inlet duct 4), to the upper side (outlet duct 5).

The heat of the exhaust gas is recovered in heat recovery parts, which are constituted of a first heat transfer tube 1, a second heat transfer tube 2, and a third heat transfer tube 3, by being transferred to water circulating inside each heat transfer tube. The water circulating through the heat recovery parts (heat transfer tubes) absorbs heat and turns into steam. The steam generated in the heat recovery parts is then supplied to a steam turbine (not shown) and utilized as power for rotating the steam turbine which is connected with a generator.

The first heat transfer tube 1, the second heat transfer tube 2, and the third heat transfer tube 3 function as the heat recovery parts which recover heat from the exhaust gas. These heat transfer tubes are disposed in the order of the third heat transfer tube 3, the second heat transfer tube 2, and the first heat transfer tube 1, from the upstream side in the circulation direction of the exhaust gas (direction from the lower side to the upper side). Each heat transfer tube is constituted as a small-tube bank connecting a plurality of small tubes, and the water inflowing through an inlet part (not shown) of each heat transfer tube passes through the small-tube bank and outflows through an outlet part (not shown) of each heat transfer tube.

The first heat transfer tube 1, the second heat transfer tube 2, and the third heat transfer tube 3 are connected by suspension parts 11a to 11d and fixed at a fixed position inside the exhaust heat recovery boiler 10. The suspension parts 11a to 11d are connected with support beams 6a to 6d, respectively. The loads of the first heat transfer tube 1, the second heat transfer tube 2, and the third heat transfer tube 3 act on the support beams 6a to 6d through the suspension parts 11a to 11d. The loads acting on the support beams 6a to 6d are transferred, through a support steel frame 7a joined on the support beams 6a to 6d, to a support steel frame 7b and a support steel frame 7c standing on the ground.

As shown in Fig. 16 which is a cross-sectional view along the line C-C' of Fig. 1, the suspension part 11a includes a first heat transfer tube support plate 101 which is made of metal and supports the first heat transfer tube 1; a first heat transfer tube support bar 100 which connects the support beam 6a and the first heat transfer tube support plate 101; a second heat transfer tube support plate 102 which is made of metal and supports the second heat transfer tube 2; and a second heat transfer tube support bar 104 which connects the first heat transfer tube support plate 101 and the second heat transfer tube support plate 102. The suspension part 11a further includes: a third heat transfer tube support plate 103 which is made of metal and supports the third heat transfer tube 3; and a third heat transfer tube support bar 105 which connects the second heat transfer tube support plate 102 and the third heat transfer tube support plate 103. A support plate 106 is a plate-like member which is made of metal and joined to the support beam 6a by welding.

In Fig. 16, the first heat transfer tube support plate 101 includes a plurality of through-holes for the first heat transfer tube 1 to pass through, and the upper part of the first heat transfer tube support plate 101 is connected with the first heat transfer tube support bar 100, while the lower part is connected with the second heat transfer tube support bar 104. The second heat transfer tube support plate 102 includes a plurality of through-holes for the second heat transfer tube 2 to pass through, and the upper part of the second heat transfer tube support plate 102 is connected with the second heat transfer tube support bar 104, while the lower part is connected with the third heat transfer tube support bar 105. The third heat transfer tube support plate 103 includes a plurality of through-holes for the third heat transfer tube 3 to pass through, and the upper part of the third heat transfer tube support plate 103 is connected with the third heat transfer tube support bar 105.

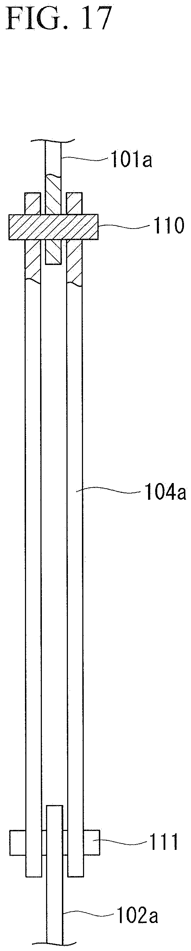

Next, the configuration of the second heat transfer tube support bar 104a will be described using Fig. 17. Fig. 17 is a view in the direction of the arrow D of Fig. 16, except for the portion around a support pin 110 (shaded portion) which is a cross-sectional view in the direction perpendicular to the direction D. As shown in Fig. 17, the second heat transfer tube support bar 104a is constituted of two support bars disposed so as to sandwich the first heat transfer tube support plate 101a and the second heat transfer tube support plate 102a.

The two support bars are each provided with a through-hole in the upper part, and a through-hole provided for connecting with the second heat transfer tube support bar 104a is disposed in the lower part of the first heat transfer tube support plate 101a. The through-holes of the two support bars and the through-hole provided in the lower part of the first heat transfer tube support plate 101a are disposed in alignment with each other, and the support pin 110 is inserted through these through-holes.

The two support bars are also each provided with a through-hole in the lower part, and a through-hole provided for connecting with the second heat transfer tube support bar 104a is disposed in the upper part of the second heat transfer tube support plate 102a. A support pin 111 is inserted through the through-holes of the two support bars and the through-hole provided in the second heat transfer tube support plate 102a.

While the configuration of the second heat transfer tube support bar 104a has been described above using Fig. 17, the description of other heat transfer tube support bars (104b to 104d, 105a to 105d) will be omitted, as they have the same configuration as that of the second heat transfer tube support bar 104a.

In addition, the first heat transfer tube support bar 100 has also the same configuration as the second heat transfer tube support bar 104a, although the through-hole provided in the upper part of the first heat transfer tube support bar 100 is disposed in alignment with the through-hole provided in the support plate 106a welded on the support beam 6a, and the first heat transfer tube support bar 100 is supported by the support pin.

While the configuration of the suspension part 11a has been described above, the description of the suspension part 11b, the suspension part 11c, and the suspension part 11d will be omitted, as they have the same configuration as that of the suspension part 11a.

Although the support steel frame 7c is located at the position of the inlet duct 4 in Fig. 1 and Fig. 2, the positions of the inlet duct 4 and the support steel frame 7c do not coincide in the depth direction. Therefore, the exhaust gas inflowing through the inlet duct 4 flows to the inside of the exhaust heat recovery boiler 10 without being blocked by the support steel frame 7c.

On the outer wall of the exhaust heat recovery boiler 10, a first opening/closing gate (first opening/closing part) 8 is installed for carrying to the inside members which constitute a catalyst system 12 of a denitration device to be described later. As shown in Fig. 1, the first opening/closing gate 8 is a gate which is pre-installed before the catalyst system 12 of this embodiment is installed and can be opened and closed to allow workers to enter the exhaust heat recovery boiler 10 for performing inspection and maintenance of the heat transfer tubes, etc. inside the exhaust heat recovery boiler 10. As shown in Fig. 1 and Fig. 2, the first opening/closing gate 8 is installed at a position where the heat recovery parts (the first heat transfer tube 1, the second heat transfer tube 2, and the third heat transfer tube 3) are not provided in the inside. More specifically, the first opening/closing gate 8 is installed at a first position which is located between the first heat transfer tube 1 and the second heat transfer tube 2. The first position is a space which is provided in advance to allow workers to perform inspection and maintenance of the first heat transfer tube 1, the second heat transfer tube 2, etc. inside the exhaust heat recovery boiler 10.

In addition, a second opening/closing gate (second opening/closing part) 9 for carrying to the inside a reducing agent injection system 13 of the denitration device to be described later is installed on the outer wall of the exhaust heat recovery boiler 10. As shown in Fig. 1, the second opening/closing gate 9 is a gate which is pre-installed before the reducing agent injection system 13 of this embodiment is installed, to allow workers to enter the exhaust heat recovery boiler 10 to perform inspection and maintenance of each heat transfer tube in the exhaust heat recovery boiler 10. As shown in Fig. 1 and Fig. 2, the second opening/closing gate 9 is installed at a position where the heat recovery parts (the first heat transfer tube 1, the second heat transfer tube 2, and the third heat transfer tube 3) are not provided in the inside. More specifically, the second opening/closing gate 9 is installed at a second position which is located between the second heat transfer tube 2 and the third heat transfer tube 3. The second position is a space which is provided in advance to allow workers to perform maintenance of the inside of the exhaust heat recovery boiler 10. The second position is a space which is provided in advance to allow workers to perform inspection and maintenance of the second heat transfer tube 2 and the third heat transfer tube 3 inside the exhaust heat recovery boiler 10.

Thus, the exhaust heat recovery boiler 10 shown in Fig. 1 is not provided with a denitration device for decomposing nitrogen oxides (nitrogen monoxide, nitrogen dioxide, etc.) contained in exhaust gas. Accordingly, the exhaust heat recovery boiler 10 shown in Fig. 1 discharges the exhaust gas, which inflows through the inlet duct 4, directly through the outlet duct 5 without decomposing the nitrogen oxides contained in the exhaust gas.

On the other hand, the exhaust heat recovery boiler 10 shown in Fig. 1 has a space between the first heat transfer tube 1 and the second heat transfer tube 2, and includes the first opening/closing gate 8 through which catalyst members (catalyst packs 30 to be described later) can be carried from the outside of the exhaust heat recovery boiler 10 into the space. The first opening/closing gate 8 is a gate which can be opened and closed for carry-in from the outside of the exhaust heat recovery boiler 10 to the inside of the exhaust heat recovery boiler 10 where the heat recovery parts (heat transfer tubes) are installed.

In addition, the exhaust heat recovery boiler 10 shown in Fig. 1 has a space between the second heat transfer tube 2 and the third heat transfer tube 3, and includes the second opening/closing gate 9 through which blow-in members (ammonia injection pipes 40 to be described later) can be carried from the outside of the exhaust heat recovery boiler 10 into the space. The second opening/closing gate 9 is a gate which can be opened and closed for carry-in from the outside of the exhaust heat recovery boiler 10 to the inside of the exhaust heat recovery boiler 10 where the heat recovery parts (heat transfer tubes) are installed. The second opening/closing gate 9 is provided on the upstream side of the first opening/closing gate 8 in the circulation direction of the exhaust gas (on the lower side in the vertical direction).

In this embodiment, as shown in Fig. 2, the plurality of catalyst members are carried through the first opening/closing gate 8 to the inside of the exhaust heat recovery boiler 10, and the catalyst system 12 constituted of the plurality of catalyst packs 30 is installed in the space between the first heat transfer tube 1 and the second heat transfer tube 2. In addition, the plurality of blow-in members (ammonia injection pipes 40 to be described later) for blowing the reducing agent to the inside of the exhaust heat recovery boiler 10 are carried through the second opening/closing gate 9 to the inside of the exhaust heat recovery boiler 10, and the reducing agent injection system 13 constituted of the plurality of blow-in members is installed in the space between the second heat transfer tube 2 and the third heat transfer tube 3.

The catalyst system 12 and the reducing agent injection system 13 function as the denitration device which decomposes the nitrogen oxides contained in the exhaust gas into water and nitrogen. In this embodiment, the selective catalytic reduction (SCR) method, which decomposes nitrogen oxides using ammonia, is used as the denitration device.

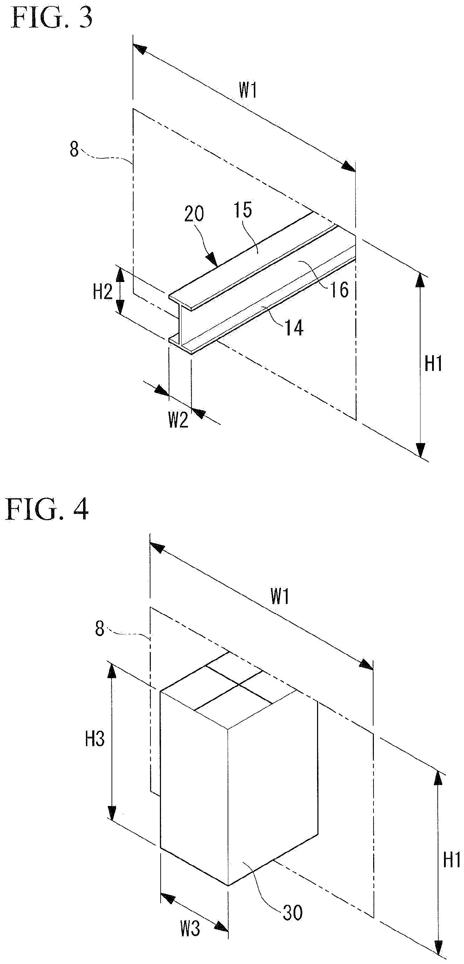

Next, the catalyst pack 30 and the support beam 20 constituting the catalyst system 12 of this embodiment will be described using Fig. 3 and Fig. 4. Fig. 3 is a view showing a state where the support beam 20 is being carried to the inside through the first opening/closing gate 8. Fig. 4 is a view showing a state where the catalyst pack 30 is being carried to the inside through the first opening/closing gate 8. In the states shown in Fig. 3 and Fig. 4, a gate (not shown) of the first opening/closing gate 8 is opened.

In Fig. 3, the support beam 20 is a member for supporting the catalyst pack 30 inside the exhaust heat recovery boiler 10. The support beam 20 has a lower plate (lower surface) 14 and an upper plate (upper surface) 15, the lower plate 14 and the upper plate 15 being parallel to each other in cross-section, and includes a vertical plate (vertical part) 16 connecting the lower plate 14 and the upper plate 15. For example, an H-beam is used. The width W2 of the support beam 20 is narrower than the width W1 of the first opening/closing gate 8, and the height H2 of the support beam 20 is smaller than the height H1 of the first opening/closing gate 8. Thus, the support beam 20 has such a size that it can be carried through the first opening/closing gate 8 to the inside of the exhaust heat recovery boiler 10 where the heat recovery parts (heat transfer tubes) are installed. Using such a small support beam 20 makes it possible to carry in and install the support beam 20 in the inside of the exhaust heat recovery boiler 10 without the need for a major modification.

In Fig. 4, the catalyst pack 30 is a catalyst member which is filled with a catalyst for decomposing the nitrogen oxides (nitrogen monoxide, nitrogen dioxide, etc.) contained in the exhaust gas into water and nitrogen by causing the exhaust gas to react with the reducing agent such as ammonia. The catalyst pack 30 is constituted of a lattice-like or plate-like catalyst so that the exhaust gas can circulate through the inside of the catalyst pack 30. The catalyst is mainly composed of TiO₂, with addition of vanadium and tungsten, etc. which are active components.

It is preferable that the reaction of the catalyst pack 30 decomposing the exhaust gas into nitrogen and water is promoted at a temperature around 350 degrees. In the temperature range below 350 degrees, ammonium hydrogen sulfate (NH₄HSO₄) produced through the reaction of sulfur trioxide (SO₃) contained in the exhaust gas and ammonia (NH₃) can cover the catalyst surface. In the temperature range above 350 degrees, on the other hand, as ammonia (NH₃) is oxidized, the amount of ammonia (NH₃) decreases and the denitration performance deteriorates. Therefore, the position to install the catalyst pack 30 is preferably a position where the exhaust gas temperature is around 350 degrees.

As shown in Fig. 4, the width W3 of the catalyst pack 30 is narrower than the width W1 of the first opening/closing gate 8, and the height H3 of the catalyst pack 30 is smaller than the height H1 of the first opening/closing gate 8. Thus, the catalyst pack 30 has such a size that it can be carried through the first opening/closing gate 8 to the inside of the exhaust heat recovery boiler 10 where the heat recovery parts (heat transfer tubes) are installed.

The catalyst pack 30 is constituted of a plate-like member divided like a lattice, and the interval of the lattices is preferably 2 mm or larger and 10 mm or smaller. The lower limit is set to 2 mm, because if the interval is narrower, a larger pressure loss occurs while the ammonia gas is passing through it. The upper limit is set to 10 mm, because if the interval is wider than 10 mm, installation of the catalyst pack inside the limited space between the first heat transfer tube 1 and the second heat transfer tube 2 becomes difficult due to the large volume of the catalyst pack. The outer surface of the catalyst pack 30 is covered with a metal frame; the thickness of the frame is preferably 1 mm or larger and 5 mm or smaller. A frame thickness of less than 1 mm would make the production difficult, while a frame thickness of more than 5 mm would cause an increase in volume of the catalyst pack 30 and make it difficult to install inside the limited space. Using the catalyst pack 30 as described above makes it possible to reduce the size and the weight of the catalyst pack so as to be carried in and installed inside the exhaust heat recovery boiler 10, without the need for a major modification, as well as to enhance the denitration performance in the limited space between the first heat transfer tube 1 and the second heat transfer tube 2.

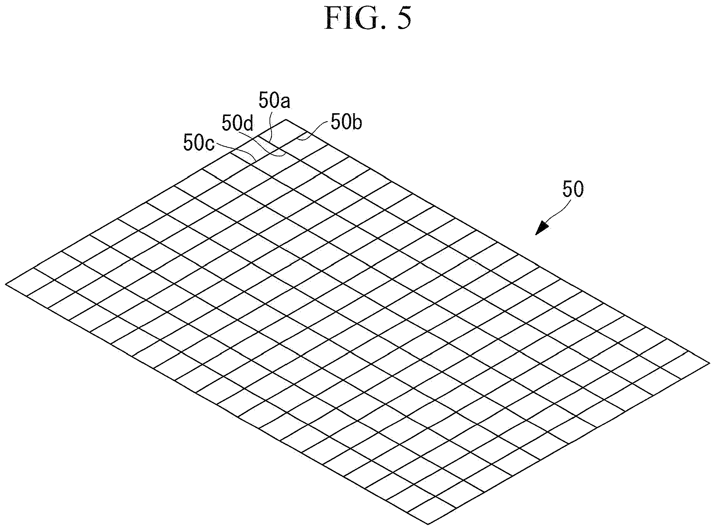

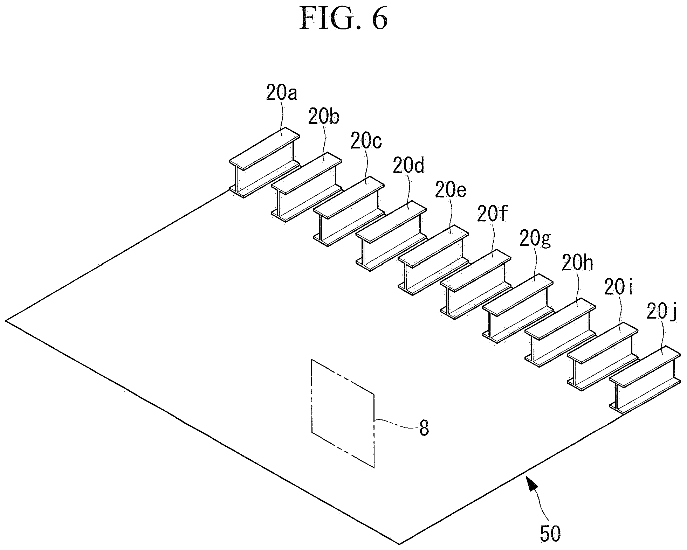

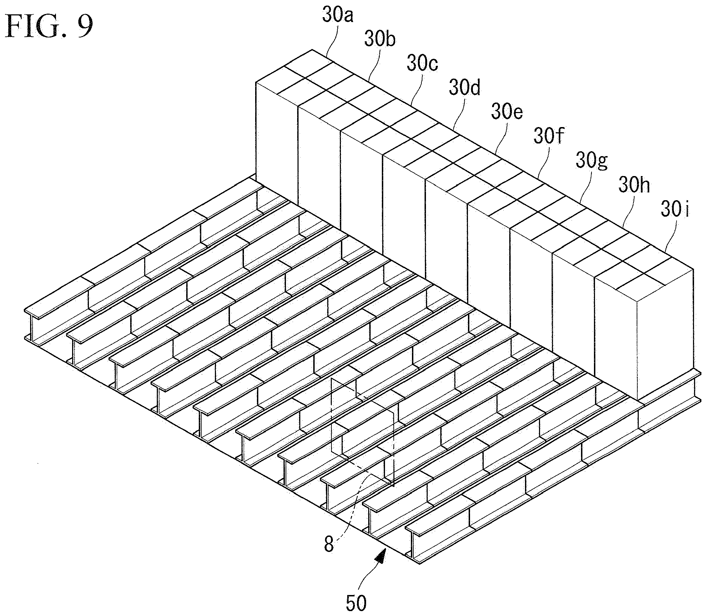

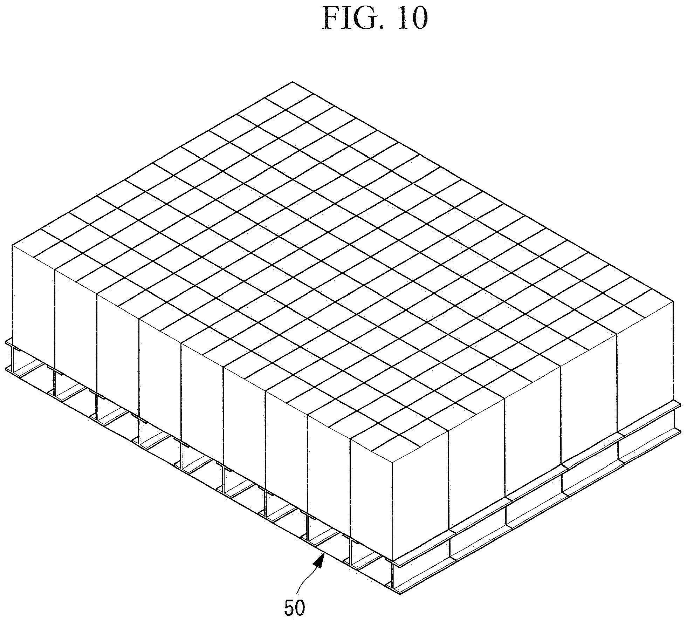

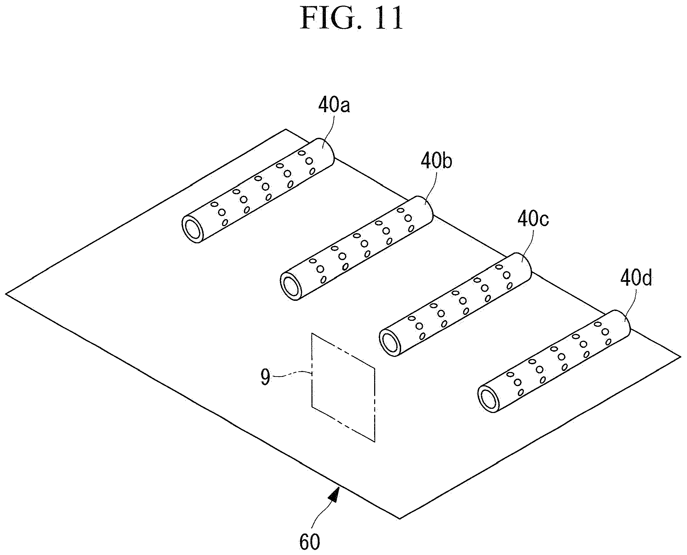

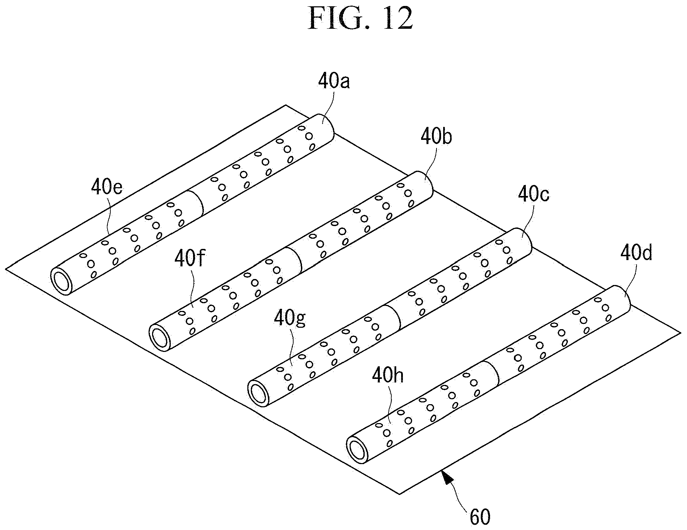

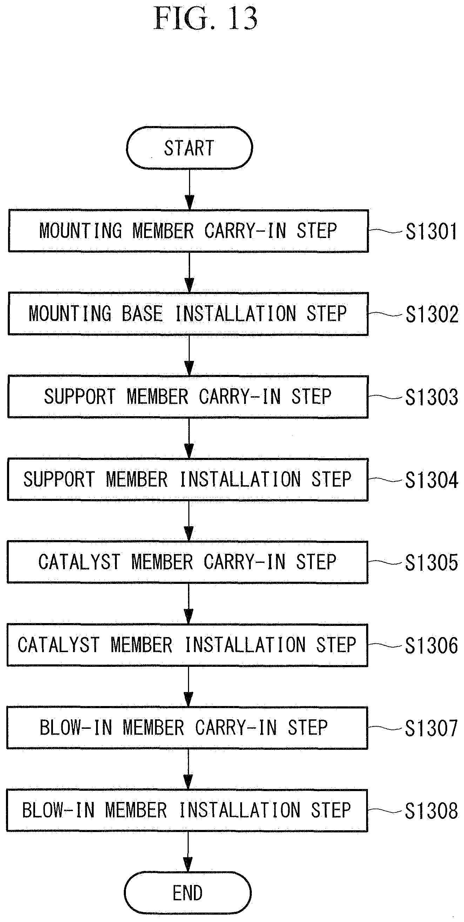

Next, a denitration device installation method of this embodiment will be described using Fig. 5 to Fig. 13. Fig. 5 is a view showing a carry-in step of mounting members and an installation step of a mounting base. Fig. 6 to Fig. 8 are views showing a carry-in step and an installation step of the support members. Fig. 9 and Fig. 10 are views showing a carry-in step and an installation step of the catalyst members. Fig. 11 and Fig. 12 are views showing a carry-in step and an installation step of the blow-in members. Fig. 13 is a flowchart showing the steps of the denitration device installation method of the first embodiment.

Fig. 5 is a perspective view of the cross-section along the line A-A' of Fig. 1 showing a state where a mounting base 50, on which the support beams 20 are mounted, is installed. In Fig. 5, reference signs 50a, 50b, 50c, and 50d denote the mounting members which constitute the mounting base 50, and they are constituted of metal bar members. The mounting members 50a, 50b, 50c, and 50d are joined to each other by welding, etc.

In the denitration device installation method of the first embodiment, first, a worker carries the plurality of mounting members including the mounting members 50a, 50b, 50c, and 50d to the inside through the first opening/closing gate 8. This step corresponds to a mounting member carry-in step (S1301) in Fig. 13.

Next, the worker joins the plurality of mounting members 50a to 50d, which are carried to the inside in the mounting member carry-in step, by welding, etc. to thereby dispose the plurality of mounting members 50a to 50d in a lattice-like shape and constitute the mounting base 50. A support plate 108 to be described later is provided in one of the mounting members 50a, 50b, 50c, and 50d, and a catalyst support bar 107 to be described later and the support plate 108 are connected inside the exhaust heat recovery boiler 10 and are supported by the first heat transfer tube support plate 101. The mounting base 50 is installed on a plane (on the cross-section along the line A-A') perpendicular to the circulation direction of the exhaust gas. This step corresponds to a mounting base installation step (S1302) in Fig. 13.

Next, the worker carries the plurality of support beams 20 to the inside through the first opening/closing gate 8, and installs the plurality of support beams 20, which are carried to the inside, on the mounting base 50 which is a position where the heat recovery parts (heat transfer tubes) are not installed inside the exhaust heat recovery boiler 10. Here, the first carry-in step of carrying the plurality of support beams (support members) 20 to the inside through the first opening/closing gate 8 corresponds to a support member carry-in step (S1303) in Fig. 13, and the first installation step of installing the plurality of support beams 20 on the mounting base 50 corresponds to a support member installation step (S1304) in Fig. 13.

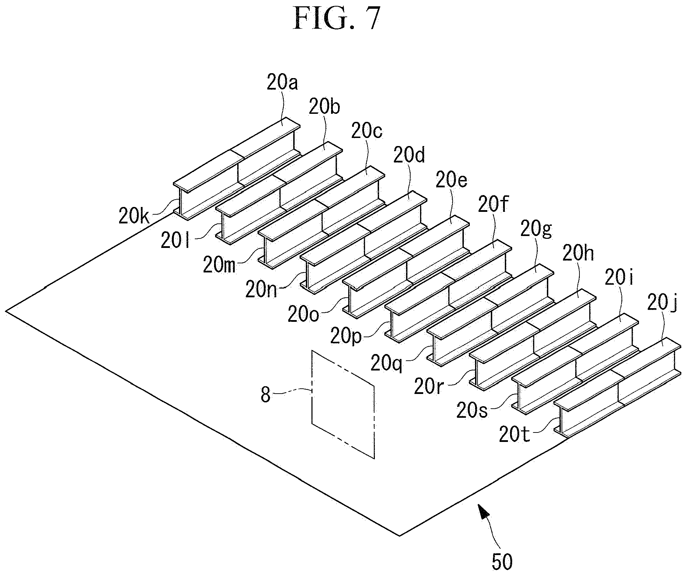

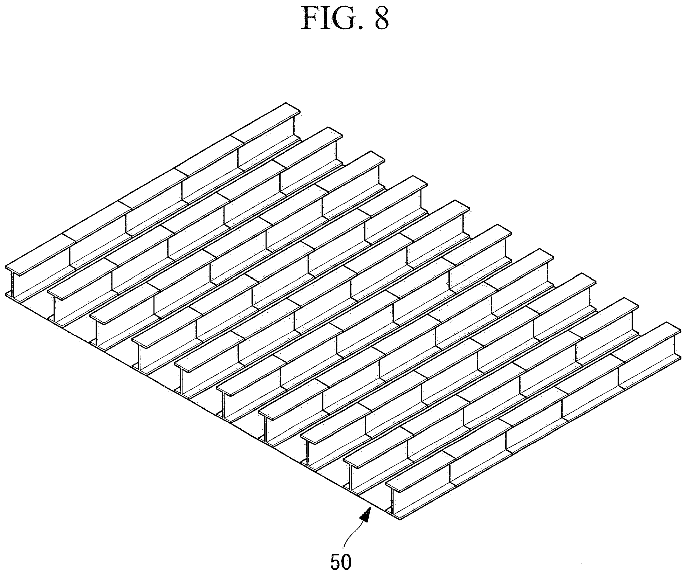

As shown in Fig. 6, the plurality of support beams 20, which are carried to the inside through the first opening/closing gate 8 (the portion indicated by the dotted line in Fig. 6), are installed one by one from the left side to the right side of Fig. 6, for example, in the order of a support beam 20a, a support beam 20b, and a support beam 20c from the position farthest from the first opening/closing gate 8. When a support beam 20j of Fig. 6 is installed, a support beam 20k shown in Fig. 7 is installed, and the support beams 20 are installed one by one from the left side to the right side of Fig. 7. Thus, the support beams 20 are installed in rows from the position farthest from the first opening/closing gate 8 to the near side, and the plurality of support beams 20 are installed on the entire surface of the mounting base 50 as shown in Fig. 8. The adjacent support beams 20 are joined to each other by welding or with bolts, etc.

Next, the worker carries the plurality of catalyst packs 30 to the inside through the first opening/closing gate 8, and the plurality of catalyst packs 30, which are carried to the inside, are installed on the support beams 20. Here, the second carry-in step of carrying the plurality of catalyst packs 30 to the inside through the first opening/closing gate 8 corresponds to a catalyst member carry-in step (S1305) in Fig. 13, and the second installation step of installing the plurality of catalyst packs 30 on the support beams 20 corresponds to a catalyst member installation step (S1306) in Fig. 13.

As shown in Fig. 9, the plurality of catalyst packs 30, which are carried to the inside through the first opening/closing gate 8 (the portion indicated by the dotted line in Fig. 9), are installed one by one from the left side to the right side in the width direction of the exhaust heat recovery boiler 10 of Fig. 9, for example, in the order of a catalyst pack 30a, a catalyst pack 30b, and a catalyst pack 30c from the position farthest from the first opening/closing gate 8. When installation of a catalyst pack 30i of Fig. 9 is completed, the next catalyst pack 30 is installed at a position in front of the catalyst pack 30a, and the catalyst packs 30 are installed one by one from the left side to the right side of Fig. 9. Thus, the catalyst packs 30 are installed in rows from the position farthest from the first opening/closing gate 8 to the near side, and the plurality of catalyst packs 30 are installed on the plurality of support beams 20 as shown in Fig. 10.

Thus, the mounting base 50 is installed on the cross-section along the line A-A' of Fig. 1, and the plurality of support beams 20 are installed on the mounting base 50, and further, the plurality of catalyst packs 30 are installed on the plurality of support beams 20, which completes installation of the catalyst system 12. As described above, the catalyst pack 30 is a member having the width W3 in the width direction. The plurality of support beams 20 are disposed at intervals such that the interval between the vertical plates 16 of the support beams 20, which are adjacent to each other in the horizontal direction (width direction in the main body of the exhaust heat recovery boiler 10) in Fig. 9, is equal to the width W3 of the catalyst pack 30. Thus, as shown in Fig. 9, the plurality of support beams 20 adjacent to each other in the horizontal direction are installed at the interval equal to the width W3. In addition, one catalyst pack 30 bridges the interval between two adjacent support beams 20 such that the interval between the vertical plates 16 of the support beams 20 adjacent to each other in the horizontal direction of Fig. 9 is equal to the width W3 of the catalyst pack 30.

Next, the worker carries the plurality of pipe-like ammonia injection pipes (blow-in members) 40 to the inside through the second opening/closing gate 9, and connects the plurality of ammonia injection pipes 40, which are carried to the inside, by welding, etc., and forms a passage for the ammonia gas functioning as the reducing agent to circulate through. Here, the third carry-in step of carrying the plurality of ammonia injection pipes 40 to the inside through the second opening/closing gate 9 corresponds to a blow-in member carry-in step (S1307) in Fig. 13, and the third installation step of installing the plurality of ammonia injection pipes 40 and forming the passage for the ammonia to circulate through corresponds to a blow-in member installation step (S1308) in Fig. 13.

As shown in Fig. 11, the plurality of ammonia injection pipes 40, which are formed in such a size that they can be carried to the inside through the second opening/closing gate 9 (the portion indicated by the dotted line in Fig. 11), are installed one by one from the left side to the right side of Fig. 11, for example, in the order of an ammonia injection pipe 40a, an ammonia injection pipe 40b, and an ammonia injection pipe 40c, from the position farthest from the second opening/closing gate 9. In this way, the ammonia injection pipes 40 are installed in rows from the position farthest from the second opening/closing gate 9 to the near side, and the plurality of ammonia injection pipes 40 are installed on the entire surface of a plane 60 as shown in Fig. 12. Thus, the plurality of ammonia injection pipes 40 are installed on the cross-section along the line B-B' of Fig. 1, which completes installation of the reducing agent injection system 13.

Here, the plane 60 corresponds to the cross-section along the line B-B' of Fig. 1, and the plurality of ammonia injection pipes 40 are installed on the plane (on the cross-section along the line B-B') perpendicular to the circulation direction of the exhaust gas.

As shown in Fig. 12, when the plurality of ammonia injection pipes 40 are connected, an ammonia gas passage is formed which communicates an ammonia gas inflow passage (not shown) and an ammonia gas outflow passage (not shown). The ammonia injection pipe 40 is provided with plurality of outflow holes, and through these outflow holes, the ammonia gas circulating inside the ammonia injection pipe 40 outflows. Thus, the plurality of ammonia injection pipes 40 function as the blow-in members for blowing in the ammonia gas for reducing the exhaust gas passing through the catalyst packs 30.

As shown in Fig. 1, the position of the cross-section along the line B-B', where the ammonia injection pipes 40 are installed, is located on the upstream side of the cross-section A-A', where the catalyst packs 30 are installed, in the circulation direction of the exhaust gas. Therefore, the exhaust gas mixed with the ammonia gas which outflows through the outflow holes of the ammonia injection pipes 40 flows into the catalyst packs 30. This causes the nitrogen oxides contained in the exhaust gas to be reduced by the ammonia serving as the reducing agent inside the catalyst packs 30, so that the nitrogen oxides are decomposed into nitrogen and water.

The width of the ammonia injection pipe 40 is narrower than the width of the second opening/closing gate 9, and the height of the ammonia injection pipe 40 is smaller than the height of the second opening/closing gate 9. Thus, the ammonia injection pipe 40 has such a size that it can be carried to the inside of the exhaust heat recovery boiler 10 through the second opening/closing gate 9. In this way, it is possible to carry the plurality of ammonia injection pipes 40, which are pipe-like members, to the inside through the second opening/closing gate 9, and to form the passage for circulating the ammonia gas serving as the reducing agent by connecting the ammonia injection pipes.

As described above, according to the first embodiment, as the worker performs steps from S1301 to S1306 of Fig. 13, the plurality of support beams 20 and the plurality of catalyst packs 30 are carried to the inside through the first opening/closing gate 8 and installed on the mounting base 50. In this way, it is possible, without involving a major modification of the exhaust heat recovery boiler 10, to carry in and install the plurality of catalyst packs 30 using the first opening/closing gate 8 for carry-in to the inside of the exhaust heat recovery boiler 10. Thus, it is possible to provide an installation method of the catalyst packs 30 which can install the catalyst packs 30 in the exhaust heat recovery boiler 10 without the need for a major modification.

According to the first embodiment, as the worker performs step S1307 of Fig. 13, the plurality of ammonia injection pipes 40 for blowing in the ammonia gas for reducing the exhaust gas passing through the catalyst packs 30 are carried to the inside through the second opening/closing gate 9 for carry-in to the inside of the exhaust heat recovery boiler 10. In addition, as the worker performs step S1308 of Fig. 13, the plurality of ammonia injection pipes 40, which are carried to the inside in step S1307, are installed on the upstream side of the plurality of catalyst packs 30 in the circulation direction of the gas.

In this way, it is possible, without involving a major modification of the exhaust heat recovery boiler 10, to carry to the inside and install the plurality of ammonia injection pipes 40 using the second opening/closing gate 9 for carry-in to the inside of the exhaust heat recovery boiler 10. Thus, it is possible to provide an installation method of the ammonia injection pipes 40 which can install the plurality of catalyst packs 30 and the ammonia injection pipes 40 in the exhaust heat recovery boiler 10 without the need for a major modification.

According to the first embodiment, the support beam 20 is, for example, an H-beam, of which the lower plate (lower surface) 14 and the upper plate (upper surface) 15 are parallel to each other in cross-section and which includes the vertical plate (vertical part) 16 connecting the lower plate 14 and the upper plate 15, and the catalyst pack 30 is a member having the predetermined width W3. In addition, in the support member installation step (S1304), the catalyst packs 30 are installed such that one catalyst pack 30 bridges the interval between two support beams 20, which are disposed adjacent to each other at an interval such that the interval between the vertical plates 16 of the plurality of support beams 20 adjacent to each other in the width direction of the exhaust heat recovery boiler 10 is equal to the width W3 of the catalyst pack 30.

In this way, the support beams 20 are disposed appropriately at the intervals equal to the predetermined width W3 to support the catalyst packs 30 having the predetermined width W3. Thus, according to the first embodiment, it is possible to provide an installation method of the catalyst packs 30 which can appropriately install the support beams 20 for supporting the catalyst packs 30 having the predetermined width W3.

According to the first embodiment, the plurality of support beams 20 and the plurality of catalyst packs 30 are carried in and installed through the first opening/closing gate 8, and the plurality of ammonia injection pipes 40 are carried in and installed through the second opening/closing gate 9. In this way, it is possible to install the plurality of catalyst packs 30 at appropriate positions between the first heat transfer tube 1 and the second heat transfer tube 2, and to install the plurality of ammonia injection pipes 40 at appropriate positions between the second heat transfer tube 2 and the third heat transfer tube 3. Thus, it is possible to provide an installation method of the catalyst packs 30 which can install the catalyst packs 30 and the ammonia injection pipes 40 in the exhaust heat recovery boiler 10 without the need for a major modification.

According to the first embodiment, the plurality of ammonia injection pipes 40 are connected to form the passage for the ammonia gas to circulate through. In this way, the plurality of ammonia injection pipes 40, which are pipe members, are carried to the inside through the second opening/closing gate 9 and these ammonia injection pipes are connected to form the passage for circulating the ammonia gas. Thus, according to the first embodiment, it is possible to form the passage for circulating the reducing agent to the exhaust heat recovery boiler 10 without the need for a major modification.

In the first embodiment, the support member installation step (S1304) is a step of installing the plurality of support beams 20 on the plane perpendicular to the circulation direction of the exhaust gas, and the catalyst member installation step (S1306) is a step of installing the plurality of catalyst packs 30 on the plane perpendicular to the circulation direction of the exhaust gas. In this way, the plurality of catalyst packs 30 are installed on the plane perpendicular to the circulation direction of the exhaust gas. Thus, it is possible to dispose the plurality of catalyst packs 30 at positions suitable for decomposing the exhaust gas containing nitrogen oxides.

According to the first embodiment, the mounting base 50, on which the plurality of support beams 20 are mounted, is installed by using the first opening/closing gate 8 for catty-in to the inside of the exhaust heat recovery boiler 10. Thus, it is possible to provide an installation method of the catalyst packs 30 which, even when the exhaust heat recovery boiler 10 shown in Fig. 1 does not include a mechanism for mounting the support beams 20, can install the catalyst packs 30 in the exhaust heat recovery boiler 10 without the need for a major modification.

According to the first embodiment, the first opening/closing gate 8 and the second opening/closing gate 9 are pre-installed in the exhaust heat recovery boiler 10. Thus, it is possible to provide an installation method of the catalyst packs 30 which can install the catalyst packs 30 in the exhaust heat recovery boiler 10, without the need for the modification of newly installing the first opening/closing gate 8 and the second opening/closing gate 9 in the exhaust heat recovery boiler 10 in order to carry to the inside the plurality of support beams 20, the plurality of catalyst packs 30, and the plurality of ammonia injection pipes (blow-in members) 40.

### Second Embodiment

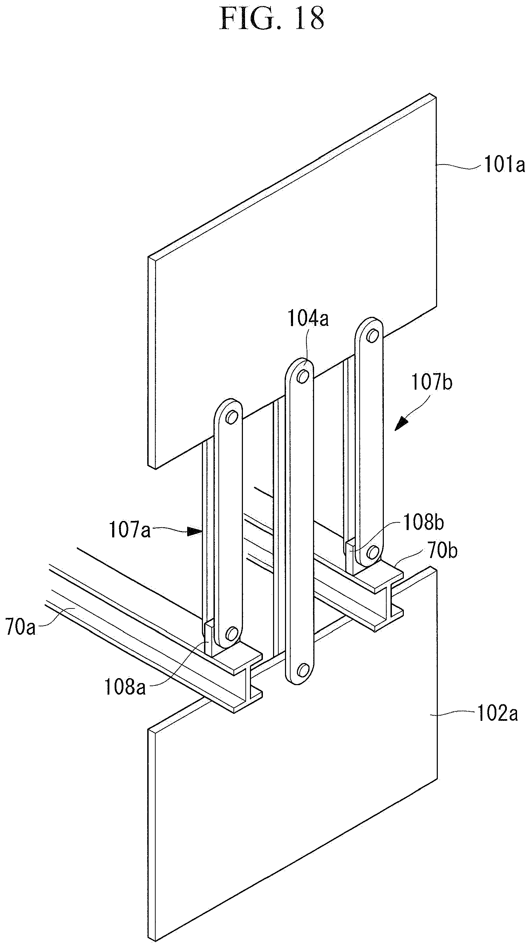

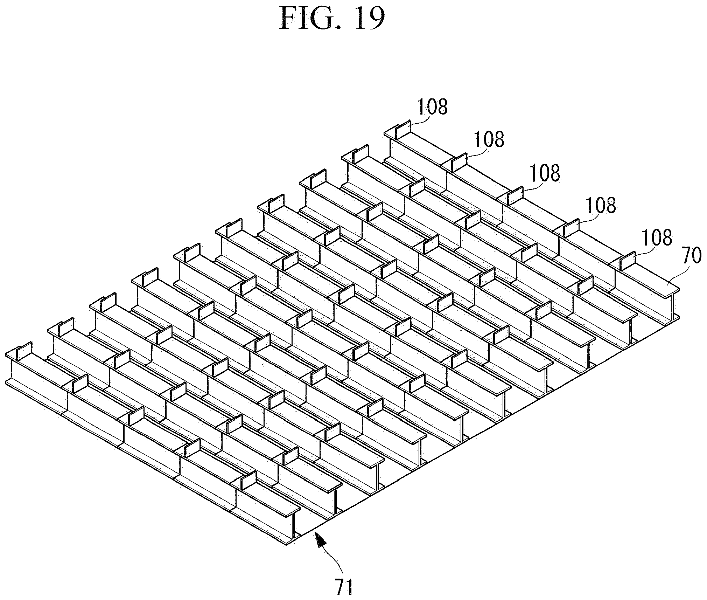

Next, a second embodiment of the present invention will be described using Fig. 18 and Fig. 19.

In the first embodiment, the mounting base 50 is installed by joining the mounting members, which are constituted of metal bar members, to each other by welding. In the second embodiment, by contrast, a mounting base 71 is installed by using a support beam 70, such as an H-beam, of which the bottom surface and the upper surface are parallel to each other in cross-section.

The second embodiment is a modification of the first embodiment; as the second embodiment is the same as the first embodiment except for the parts to be particularly described below, the description of the rest of the second embodiment will be omitted.

Fig. 18 is a view showing an installed state of the support beam 70 of the second embodiment, and is a perspective view around the first heat transfer tube support plate 101a, the second heat transfer tube support plate 102a, and the second heat transfer tube support bar 104a supporting these support plates.

A support beam 70a and a support beam 70b are mounting members constituting the mounting base 71. A support plate 108a is joined to the support beam 70a by welding, and a support plate 108b is joined to the support beam 70b by welding.

The first heat transfer tube support plate 101a and the support beam 70a are connected through a pair of catalyst support bars 107a having a through-hole in the upper part and the lower part. The configuration of the catalyst support bar 107a is the same as the configuration of the second heat transfer tube support bar 104a of Fig. 17. The through-hole in the upper part of the catalyst support bar 107a is disposed in alignment with the through-hole provided in the lower part of the first heat transfer tube support plate 101a, and the support pin is inserted through these through-holes. The through-hole in the lower part of the catalyst support bar 107a is disposed in alignment with the through-hole of the support plate 108a welded on the support beam 70a, and the support pin is inserted through these through-holes.

The first heat transfer tube support plate 101a and the support beam 70b are connected through a pair of catalyst support bars 107b having a through-hole in the upper part and the lower part. The description of the configuration of the catalyst support bar 107b will be omitted, as it is the same as the configuration of the catalyst support bar 107a.

As with the support beam 20 of Fig. 3, the support beam 70 has such a size that it can be carried through the first opening/closing gate 8 to the inside of the exhaust heat recovery boiler 10 where the heat recovery parts (heat transfer tubes) are installed. The plurality of support beams 70 are carried to the inside one by one through the first opening/closing gate 8 in step S1301 of Fig. 13, the mounting member carry-in step. Fig. 19 is a view showing a state where the mounting base 71 of the second embodiment is installed, and the mounting base 71 is formed by installing the plurality of support beams 70. The adjacent support beams 70 are joined to each other by welding or with bolts, etc.

### Third Embodiment

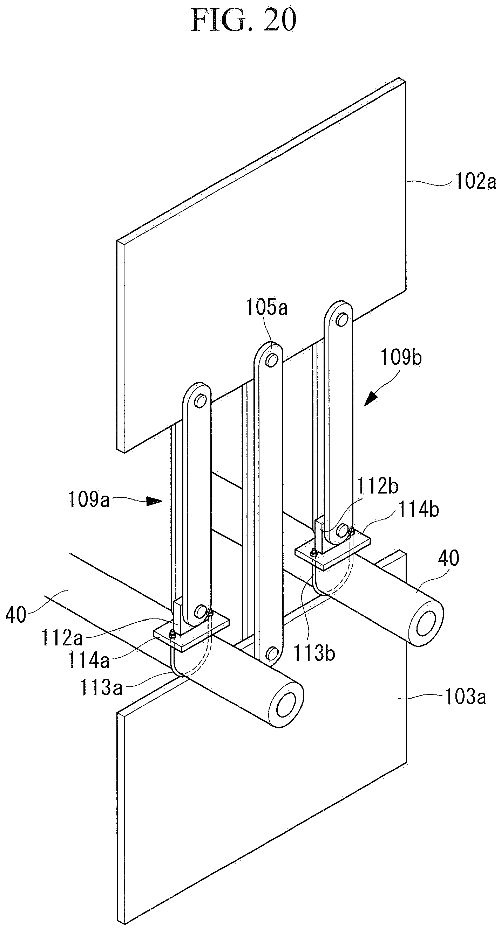

Next, a third embodiment of the present invention will be described using Fig. 20.

In the first embodiment, installation of the ammonia injection pipes 40 on the plane 60 as shown in Fig. 12 has been described, while the description of the specific method for installing the ammonia injection pipes 40 on the plane 60 has been omitted. The third embodiment, by contrast, shows the specific method for installing the ammonia injection pipes 40 on the plane 60.

Fig. 20 is a view showing an installed state of the ammonia injection pipes 40 of the third embodiment, and is a perspective view around the second heat transfer tube support plate 102a, the third heat transfer tube support plate 103a, and the third heat transfer tube support bar 105a supporting these support plates.

The ammonia injection pipes 40 are fixed at a constant distance from the second heat transfer tube support plate 102a by a blow-in member support bar 109a.

The configuration of the blow-in member support bar 109a is the same as the configuration of the second heat transfer tube support bar 104a of Fig. 17. A through-hole in the upper part of the blow-in member support bar 109a is disposed in alignment with a through-hole provided in the lower part of the second heat transfer tube support plate 102a, and a support pin is inserted through these through-holes. A through-hole provided in the lower part of the blow-in member support bar 109a is disposed in alignment with a through-hole of a support plate 112a welded on a fixing plate 114a, and a support pin is inserted through these through-holes.

The fixing plate 114a is provided with through-holes at two positions, one at each end. A U-bolt 113a is inserted through the through-holes at the two positions, and the U-bolt 113a and a nut are tightened with the ammonia injection pipe 40 inserted between the U-bolt 113a and the fixing plate 114a. Thus, the ammonia injection pipe 40 is sandwiched and fixed between the fixing plate 114a and the U-bolt 113a.

The ammonia injection pipes 40 are fixed at a constant distance from the second heat transfer tube support plate 102a by a blow-in member support bar 109b. The description of the blow-in member support bar 109b and the other configurations for fixing the ammonia injection pipe 40 will be omitted, as these configurations are the same as those described above.

### Fourth Embodiment

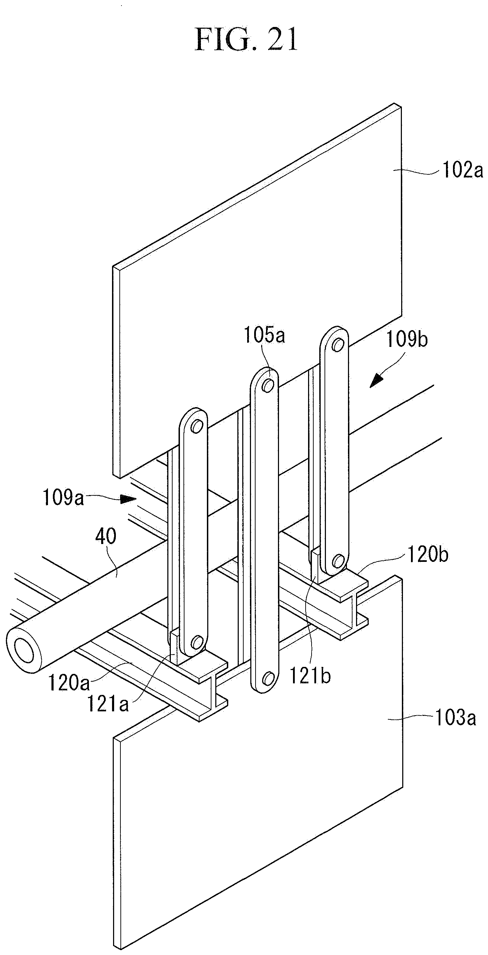

Next, a fourth embodiment of the present invention will be described using Fig. 21.

In the third embodiment, the ammonia injection pipe 40 is fixed between the fixing plate 114 and the U-bolt 113 as shown in Fig. 20. In the fourth embodiment, by contrast, a mounting base is installed by using a support beam 120, such as an H-beam, of which the bottom surface and the upper surface are parallel to each other in cross-section, and the ammonia injection pipes 40 are fixed on the mounting base.

Fig. 21 is a view showing an installed state of the support beam 120 and the ammonia injection pipe 40 of the fourth embodiment, and is a perspective view around the second heat transfer tube support plate 102a, the third heat transfer tube support plate 103a, and the third heat transfer tube support bar 105a supporting these support plates.

A support plate 121a is joined on the support beam 120a by welding, and a support plate 121b is joined on a support beam 120b by welding.

The second heat transfer tube support plate 102a and the support beam 120a are connected through the pair of blow-in member support bars 109a having the through-hole in the upper part and the lower part. The configuration of the blow-in member support bar 109a is the same as the configuration of the second heat transfer tube support bar 104a of Fig. 17. The through-hole in the upper part of the blow-in member support bar 109a is disposed in alignment with the through-hole provided in the lower part of the second heat transfer tube support plate 102a, and a support pin is inserted through these through-holes. The through-hole in the lower part of the blow-in member support bar 109a is disposed in alignment with the through-hole of the support plate 121a welded on the support beam 120a, and a support pin is inserted through these through-holes.

The second heat transfer tube support plate 102a and the support beam 120a are connected through the pair of blow-in member support bars 109b having the through-hole in the upper part and the lower part. The description of the configuration of the blow-in member support bar 109b will be omitted, as it is the same as the configuration of the blow-in member support bar 109a.

The support beam 120 has such a shape that it can be carried through the second opening/closing gate 9 to the inside of the exhaust heat recovery boiler 10 where the heat recovery parts (heat transfer tubes) are installed. The plurality of support beams 120 are carried to the inside one by one through the second opening/closing gate 9 in advance of step S1307 of Fig. 13, the blow-in member carry-in step. The adjacent support beams 120 are joined to each other by welding or with bolts, etc.

### Fifth Embodiment

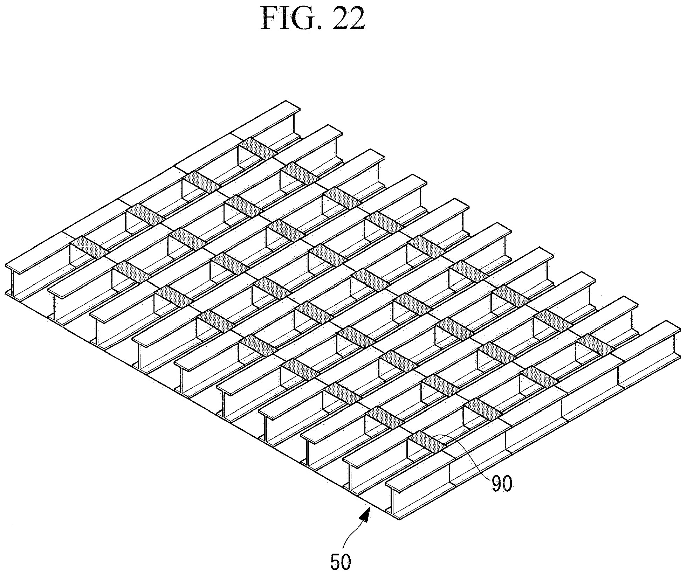

The mounting base 50 of the first embodiment has the configuration where the ammonia gas directly inflows from the reducing agent injection system 13 to other parts of the catalyst packs 30 than their surfaces on the support beams 20 on which the catalyst packs 30 are mounted. In the fifth embodiment, by contrast, a seal plate 90 is installed at a position where the support beams 20 are adjacent to each other as shown in Fig. 22.

The seal plate 90 is a metal plate member, and is joined by welding, etc. at a position where the support beams 20 are adjacent to each other. As shown in Fig. 9 and Fig. 10, the position where the support beams 20 are adjacent to each other corresponds to the position where the catalyst packs 30 are adjacent to each other. Disposing the seal plate 90 at this position can prevent the ammonia gas inflowing from the lower side from leaking to the downstream side, without passing through the catalyst packs 30, through the gaps between the catalyst packs 30 adjacent to each other.

Due to the light weight of the catalyst pack 30, the ammonia gas inflowing from the lower side can displace the catalyst pack 30 from its installation position, creating a gap between the adjacent catalyst packs 30. Installing the seal plate 90 at a position where the catalyst packs 30 are adjacent to each other can prevent the ammonia gas from outflowing to the downstream side without passing through the catalyst packs 30.

Instead of installing the seal plate 90, the adjacent catalyst packs 30 may be joined with a pin, etc. so that no gap is created between the adjacent catalyst packs 30. In the case where the outer surface of the catalyst pack 30 is formed of a metal frame, the adjacent catalyst packs 30 may be joined by welding.

Alternatively, in addition to installing the seal plate 90, the adjacent catalyst packs 30 may be joined to each other with a pin or by welding, etc.

### Other Embodiments

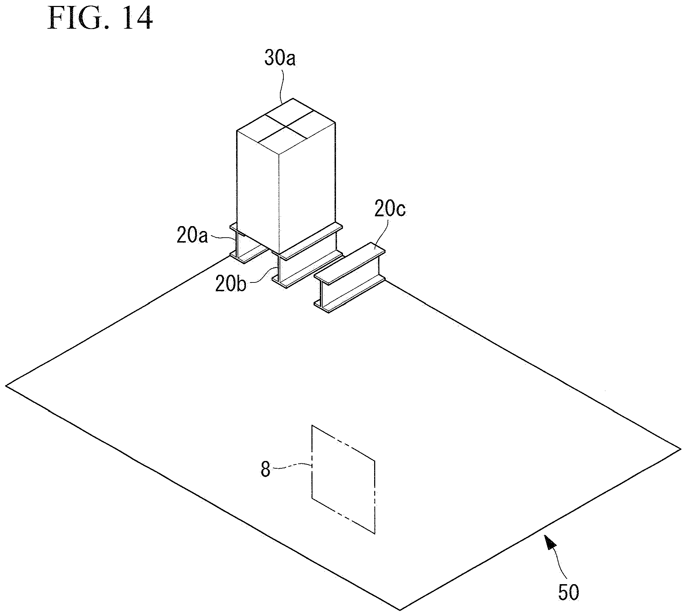

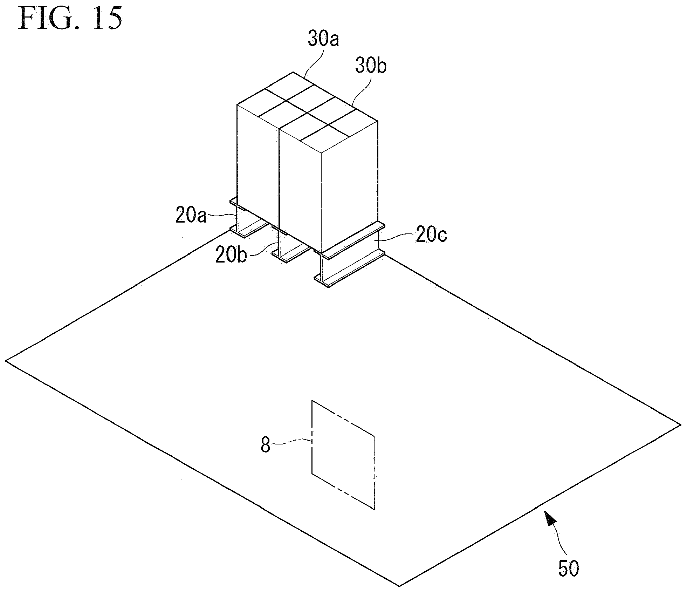

In the first embodiment, all the plurality of support beams 20 are installed on the mounting base 50 as shown in Fig. 8, and thereafter the plurality of catalyst packs 30 are installed on the plurality of support beams 20; the present invention may have another aspect in this respect. For example, as shown in Fig. 14 and Fig. 15, installation of the support beam 20 and installation of the catalyst pack 30 may be alternately repeated such that one support beam 20 is installed and then one catalyst pack 30 is installed.

In this case, the plurality of catalyst packs 30 are installed by alternately repeating the support member carry-in step (S1303) and the support member installation step (S1304) performed on one support beam 20, and the catalyst member carry-in step (S1305) and the catalyst member installation step (S1306) performed on one catalyst pack 30. In this way, the step of carrying in and installing one support beam 20 and the step of carrying in and installing one catalyst pack 30 are alternately repeated. Thus, compared with the case where all the support beams 20 are carried in and installed, and then all the catalyst packs 30 are carried in and installed, the support beams 20 which are already installed do not interfere with installation of new catalyst packs 30, so that installation of the catalyst packs 30 is facilitated.

In the first embodiment, the first opening/closing gate 8 and the second opening/closing gate 9 are pre-installed in the outer wall of the exhaust heat recovery boiler 10 before installation of the catalyst members; the present invention may have another aspect in this respect. For example, a new opening/closing gate, separate from the first opening/closing gate 8 and the second opening/closing gate 9, may be installed by construction work in the outer wall of the exhaust heat recovery boiler 10 before installation of the catalyst members. In this way, it is possible to provide a denitration device installation method which can efficiently carrying the members to the inside, and can reduce the working hours required for installing the catalyst packs 30 and the ammonia injection pipes 40 in the exhaust heat recovery boiler 10.

In the first embodiment, the mounting members 50a to 50d for installation of the mounting base 50 are carried in and installed through the first opening/closing gate 8; the present invention may have another aspect in this respect. For example, if the exhaust heat recovery boiler 10 before installation of the catalyst packs 30 as shown in Fig. 1 has the pre-installed mounting base 50, the mounting member carry-in step (S1301) and the mounting member installation step (S1302) of Fig. 13 shall be omitted and the other steps shall be performed. In this way, it is possible to provide an installation method of the catalyst packs 30 which can install the catalyst packs 30 in the exhaust heat recovery boiler 10 without the worker performing the steps of installing the mounting base on which the support beams 20 are mounted.

In the first embodiment, the installation method which includes the step of installing the catalyst packs 30 in the exhaust heat recovery boiler 10 having no catalyst packs 30 as shown in Fig. 1 has been described; the present invention may have another aspect in this respect. For example, the present invention may be a manufacturing method of the exhaust heat recovery boiler 10 which further includes a step of installing the exhaust heat recovery boiler 10 in which no catalyst packs 30 are installed as shown in Fig. 1. In this case, the manufacturing method of the exhaust heat recovery boiler 10 includes: a step of installing the exhaust heat recovery boiler 10 shown in Fig. 1; a step of installing the catalyst system 12 shown in Fig. 2; and a step of installing the reducing agent injection system 13 shown in Fig. 2. The step of installing the catalyst system 12 and the step of installing the reducing agent injection system 13 shall be the same as those of the first embodiment. Thus, it is possible, without the need for a major modification, to manufacture a heat recovery device in which catalyst members are installed.

### Reference Signs List

- 1: First heat transfer tube
- 2: Second heat transfer tube
- 3: Third heat transfer tube
- 4: Inlet duct
- 5: Outlet duct
- 8: First opening/closing gate
- 9: Second opening/closing gate
- 10: Exhaust heat recovery boiler
- 12: Catalyst system
- 13: Reducing agent injection system
- 20, 70: Support beam
- 30: Catalyst pack
- 40: Ammonia injection pipe
- 50, 71: Mounting base
- 90: Seal plate
- 100: Heat transfer tube support bar
- 101: First heat transfer tube support plate
- 102: Second heat transfer tube support plate
- 103: Third heat transfer tube support plate
- 104, 105: Heat transfer tube support bar
- 106: Support plate
- 107: Catalyst support bar
- 108: Support plate
- 109: Blow-in member support bar
- 110, 111: Support pin
- 112: Support plate
- 113: U-bolt
- 114: Fixing plate
- 120: Support beam
- 121: Support plate

## Claims

1. A heat recovery device manufacturing method for manufacturing the heat recovery device (10) in which a denitration device, which includes a plurality of catalyst members (30) for decomposing nitrogen oxides, is installed and which recovers heat from gas containing nitrogen oxides, wherein the heat recovery device (10) which is unequipped with the denitration device includes:
a heat recovery part (1, 2, 3) for recovering heat from the gas; and
a first opening/closing part (8) which can be opened and closed to carry the catalyst members (30) from an outside of the heat recovery device (10) to an inside of the heat recovery device (10) where the heat recovery part (1, 2, 3) is installed, and
the manufacturing method comprises:
a first carry-in step (S1303) of carrying a plurality of separate support members (20) for supporting the catalyst members (30) through the first opening/closing part (8) to the inside of the heat recovery device (10);
a first installation step (S1304) of installing the plurality of support members (20), which are carried to the inside of the heat recovery device (10) in the first carry-in step (S1303), at positions where the heat recovery part (1, 2, 3) is not installed inside the heat recovery device (10) and joining the adjacent support members (20) to each other;
a second carry-in step (S1305) of carrying the plurality of catalyst members (30) through the first opening/closing part (8) to the inside of the heat recovery device (10); and
a second installation step (S1306) of installing the plurality of catalyst members (30), which are carried to the inside of the heat recovery device (10) in the second carry-in step (S1305), at positions on the plurality of support members (20) which are installed in the first installation step (S1304).

2. The heat recovery device manufacturing method according to claim 1, wherein
the heat recovery device (10) further includes a second opening/closing part (9) which can be opened and closed for carry-in from the outside of the heat recovery device (10) to the inside of the heat recovery device (10),
the second opening/closing part (9) is provided on an upstream side of the first opening/closing part (8) in a circulation direction of the gas, and
the manufacturing method further comprises:
a third carry-in step (S1307) of carrying a plurality of blow-in members (40), which blow in a reducing agent for reducing the gas passing through the plurality of catalyst members (30), through the second opening/closing part (9) to the inside of the heat recovery device (10); and
a third installation step (S1308) of installing the plurality of blow-in members (40), which are carried to the inside of the heat recovery device (10) in the third carry-in step (S1307), on the upstream side of the plurality of catalyst members (30), which are installed in the second installation step (S1306), in the circulation direction of the gas.

3. The heat recovery device manufacturing method according to claim 1 or 2, wherein
the support member (20) is a member of which a lower surface and an upper surface are parallel to each other in cross-section and which has a vertical part connecting the lower surface and the upper surface,
the catalyst member (20) has a predetermined width in a width direction,
in the first installation step (S1304), the plurality of support members (20) are installed at intervals such that the interval between the vertical parts of the plurality of support members (20) adjacent to each other in the width direction in a main body of the heat recovery device (10) is equal to the predetermined width of the catalyst member (30), and
in the second installation step (S1306), the plurality of catalyst members (30) are installed such that one of the plurality of catalyst members (30) bridges the interval between two of the plurality of support members (20) installed adjacent to each other at the interval of the predetermined width.

4. The heat recovery device manufacturing method according to claim 2, wherein
the heat recovery part (1, 2, 3) includes: a first heat transfer tube (1); a second heat transfer tube (2) installed on an upstream side of the first heat transfer tube (1) in the circulation direction of the gas; and a third heat transfer tube (3) installed on an upstream side of the second heat transfer tube (2) in the circulation direction of the gas,
the first carry-in step (S1303) is a step of carrying the plurality of support members (20) to the inside of the heat recovery device (10) through the first opening/closing part (8) provided at a first position which is located between the first heat transfer tube (1) and the second heat transfer tube (2) in the circulation direction of the gas,
the first installation step (S1304) is a step of installing the plurality of support members (20) at the first position,
the second carry-in step (S1305) is a step of carrying the plurality of catalyst members (30) to the inside of the heat recovery device (10) through the first opening/closing part (8) provided at the first position,
the second installation step (S1306) is a step of installing the plurality of catalyst members (30) at the first position,
the third carry-in (S1307) step is a step of carrying the plurality of blow-in members (40) to the inside of the heat recovery device (10) through the second opening/closing part (9) provided at a second position which is located between the second heat transfer tube (2) and the third heat transfer tube (3) in the circulation direction of the gas, and
the third installation step (S1308) is a step of installing the plurality of blow-in members (40) at the second position.

5. The heat recovery device manufacturing method according to claim 2 or 4, wherein
the plurality of blow-in members (40) are pipe-like members constituting a passage for circulating the reducing agent, and
the third installation step (S1308) is a step of forming the passage by connecting the plurality of blow-in members (40).

6. The heat recovery device manufacturing method according to any one of claims 1 to 5, wherein the manufacturing method installs the plurality of catalyst members (30) by alternately repeating the first carry-in step (S1303) and the first installation step (S1304) performed on one of the plurality of support members (20), and the second carry-in step (S1305) and the second installation step (S1306) performed on one of the plurality of catalyst members (30).

7. The heat recovery device manufacturing method according to any one of claims 1 to 6, wherein, to allow the gas to circulate inside the heat recovery device (10) from the lower side to the upper side, the first installation step (S1304) is a step of installing the plurality of support members (20) on a plane perpendicular to the circulation direction of the gas, and
the second installation step (S1306) is a step of installing the plurality of catalyst members (30) on a plane perpendicular to the circulation direction of the gas.

8. The heat recovery device manufacturing method according to any one of claims 1 to 7, wherein the manufacturing method further comprises:
a step (S1301) of carrying a plurality of mounting members for constituting a mounting base, on which the plurality of support members (20) installed in the first installation step (S1304) are installed, through the first opening/closing part (8) to the inside of the heat recovery device (10); and
a step (S1302) of installing the mounting base using the plurality of mounting members which are carried to the inside in the above step (S1301).

9. The heat recovery device manufacturing method according to claim 8, wherein the mounting base (50, 71) is constituted using a member, of which a lower surface and an upper surface are parallel to each other in cross-section and which has a vertical part connecting the lower surface and the upper surface, as the mounting member.

10. The heat recovery device manufacturing method according to any one of claims 1 to 9, wherein the first opening/closing part (8) is an opening/closing part which is pre-installed in the heat recovery device (10).

11. The heat recovery device manufacturing method according to any one of claims 1 to 10, further comprising a step of installing the first opening/closing part (8) on an outer wall surface of the heat recovery device (10).

## Patentansprüche

1. Verfahren zur Herstellung einer Wärmerückgewinnungsvorrichtung zum Herstellen der Wärmerückgewinnungsvorrichtung (10), in der eine Denitriervorrichtung, die eine Vielzahl von Katalysatorelementen (30) zum Zersetzen von Stickoxiden beinhaltet, installiert ist und die Wärme aus Stickoxide enthaltendem Gas zurückgewinnt, wobei die Wärmerückgewinnungsvorrichtung (10), die nicht mit einer Denitriervorrichtung ausgerüstet ist, beinhaltet:
einen Wärmerückgewinnungsteil (1, 2, 3) zum Zurückgewinnen von Wärme aus dem Gas; und
einen ersten Öffnungs/Schließ-Teil (8), der geöffnet und geschlossen werden kann, um die Katalysatorelemente (30) von außerhalb der Wärmerückgewinnungsvorrichtung (10) in das Innere der Wärmerückgewinnungsvorrichtung (10), wo der Wärmerückgewinnungsteil (1, 2, 3) installiert ist, zu transportieren, und
das Herstellungsverfahren aufweist:
einen ersten Einführschritt (S1303) des Transportierens einer Vielzahl von separaten Stützelementen (20) zum Stützen der Katalysatorelemente (30) durch den ersten Schließ/Öffnungs-Teil (8) in das Innere der Wärmerückgewinnungsvorrichtung (10);
einen ersten Installationsschritt (S1304) des Installierens der Vielzahl von Stützelementen (20), die in dem ersten Einführschritt (S1303) in das Innere der Wärmerückgewinnungsvorrichtung (10) transportiert werden, an Positionen, wo der Wärmerückgewinnungsteil (1, 2, 3) nicht in dem Inneren der Wärmerückgewinnungsvorrichtung (10) installiert ist, und des Verbindens der angrenzenden Stützelemente (20) miteinander;
einen zweiten Einführschritt (S1305) des Transportierens der Vielzahl von Katalysatorelementen (30) durch den ersten Öffnungs/Schließ-Teil (8) in das Innere der Wärmerückgewinnungsvorrichtung (10); und
einen zweiten Installationsschritt (S1306) des Installierens der Vielzahl von Katalysatorelementen (30), die in das Innere der Wärmerückgewinnungsvorrichtung (10) in dem zweiten Einführschritt (S1305) transportiert werden, an Positionen auf der Vielzahl von Stützelementen (20), die in dem ersten Installationsschritt (S1304) installiert werden.

2. Verfahren zur Herstellung einer Wärmerückgewinnungsvorrichtung nach Anspruch 1, wobei
die Wärmerückgewinnungsvorrichtung (10) weiterhin einen zweiten Öffnungs/Schließ-Teil (9) beinhaltet, der zum Einführen von außerhalb der Wärmerückgewinnungsvorrichtung (10) in das Innere der Wärmerückgewinnungsvorrichtung (10) geöffnet und geschlossen werden kann;
der zweite Öffnungs/Schließ-Teil (9) an einer Anströmseite des ersten Öffnungs/Schließ-Teils (8) in einer Zirkulationsrichtung des Gases vorgesehen ist, und
das Herstellungsverfahren weiterhin aufweist:
einen dritten Einführschritt (S1307) des Transportierens einer Vielzahl von Einblaselementen (40), die ein Reduktionsmittel zum Reduzieren des Gases, das durch die Vielzahl von Katalysatorelementen (30) gelangt, einblasen, durch den zweiten Öffnungs/Schließ-Teil (9) in das Innere der Wärmerückgewinnungsvorrichtung (10); und
einen dritten Installationsschritt (S1308) des Installierens der Vielzahl von Einblaselementen (40), die in das Innere der Wärmerückgewinnungsvorrichtung (10) in dem dritten Einführschritt (S1307) transportiert werden, an der Anströmseite der Vielzahl von Katalysatorelementen (30), die in dem zweiten Installationsschritt (S1306) installiert werden, in Zirkulationsrichtung des Gases.

3. Verfahren zur Herstellung einer Wärmerückgewinnungsvorrichtung nach Anspruch 1 oder 2, wobei
das Stützelement (20) ein Element ist, bei dem eine untere Fläche und eine obere Fläche im Querschnitt parallel zueinander sind und das einen vertikalen Teil aufweist, der die untere Fläche mit der oberen Fläche verbindet,
das Katalysatorelement (20) eine vorbestimmte Breite in Breitenrichtung hat,
in dem ersten Installationsschritt (S1304) die Vielzahl von Stützelementen (20) in Abständen installiert werden, so dass der Abstand zwischen den vertikalen Teilen der Vielzahl von Stützelementen (20) nebeneinander in Breitenrichtung in einem Hauptkörper der Wärmerückgewinnungsvorrichtung (10) gleich der vorbestimmten Breite des Katalysatorelements (30) ist, und
in dem zweiten Installationsschritt (S1306) die Vielzahl von Katalysatorelementen (30) so installiert werden, dass eines der Vielzahl von Katalysatorelementen (30) den Abstand zwischen zwei der Vielzahl von Stützelementen (20), die nebeneinander in einem Abstand mit der vorbestimmten Breite installiert sind, überbrückt.

4. Verfahren zur Herstellung einer Wärmerückgewinnungsvorrichtung nach Anspruch 2, wobei
der Wärmerückgewinnungsteil (1, 2, 3) beinhaltet: ein erstes Wärmeübertragungsrohr (1); ein zweites Wärmeübertragungsrohr (2), das an einer Anströmseite des ersten Wärmeübertragungsrohrs (1) in Zirkulationsrichtung des Gases installiert ist; und ein drittes Wärmeübertragungsrohr (3), das an einer Anströmseite des zweiten Wärmeübertragungsrohres (2) in Zirkulationsrichtung des Gases installiert ist,
der erste Einführschritt (S1303) ein Schritt des Transportierens der Vielzahl von Stützelementen (20) in das Innere der Wärmerückgewinnungsvorrichtung (10) durch den ersten Öffnungs/Schließ-Teil (8) ist, der an einer ersten Position vorgesehen ist, die zwischen dem ersten Wärmeübertragungsrohr (1) und dem zweiten Wärmeübertragungsrohr (2) in Zirkulationsrichtung des Gases angeordnet ist,
der erste Installationsschritt (S1304) ein Schritt des Installierens der Vielzahl von Stützelementen (20) an der ersten Position ist,
der zweite Einführschritt (S1305) ein Schritt des Transportierens der Vielzahl von Katalysatorelementen (30) in das Innere der Wärmerückgewinnungsvorrichtung (10) durch den ersten Öffnungs/Schließ-Teil (8) ist, der an der ersten Position vorgesehen ist,
der zweite Installationsschritt (S1306) ein Schritt des Installierens der Vielzahl von Katalysatorelementen (30) an der ersten Position ist,
der dritte Einführschritt (S1307) ein Schritt des Transportierens der Vielzahl von Einblaselementen (40) in das Innere der Wärmerückgewinnungsvorrichtung (10) durch den zweiten Öffnungs/Schließ-Teil (9) ist, der an einer zweiten Position vorgesehen ist, die zwischen dem zweiten Wärmeübertragungsrohr (2) und dem dritten Wärmeübertragungsrohr (3) in Zirkulationsrichtung des Gases vorgesehen ist, und
der dritte Installationsschritt (S1308) ein Schritt des Installierens der Vielzahl von Einblaselementen (40) an der zweiten Position ist.

5. Verfahren zur Herstellung einer Wärmerückgewinnungsvorrichtung nach Anspruch 2 oder 4, wobei die Vielzahl von Einblaselementen (40) rohrähnliche Elemente sind, die einen Durchgang für die Zirkulation des Reduktionsmittels bilden, und
der dritte Installationsschritt (S1308) ein Schritt des Bildens des Durchgangs durch Verbinden der Vielzahl von Einblaselementen (40) ist.

6. Verfahren zur Herstellung einer Wärmerückgewinnungsvorrichtung nach einem der Ansprüche 1 bis 5, wobei bei dem Herstellungsverfahren die Vielzahl von Katalysatorelementen (30) durch abwechselndes Wiederholen des ersten Einführschritts (S1303) und des ersten Installationsschritts (S1304), der an einem der Vielzahl von Stützelementen (20) ausgeführt wird, und des zweiten Einführschrittes (S1305) und des zweiten Installationsschritts (S1306), der an einem der Vielzahl von Katalysatorelementen (30) ausgeführt wird, installiert wird.

7. Verfahren zur Herstellung einer Wärmerückgewinnungsvorrichtung nach einem der Ansprüche 1 bis 6, wobei, damit das Gas in der Wärmerückgewinnungsvorrichtung (10) von der unteren Seite zu der oberen Seite zirkulieren kann, der erste Installationsschritt (S1304) ein Schritt des Installierens der Vielzahl von Stützelementen (20) auf einer Ebene senkrecht zur Zirkulationsrichtung des Gases ist, und
der zweite Installationsschritt (S1306) ein Schritt des Installierens der Vielzahl von Katalysatorelementen (30) auf einer Ebene senkrecht zur Zirkulationsrichtung des Gases ist.

8. Verfahren zur Herstellung einer Wärmerückgewinnungsvorrichtung nach einem der Ansprüche 1 bis 7, wobei das Herstellungsverfahren weiterhin aufweist:
einen Schritt (S1301) des Transportierens einer Vielzahl von Befestigungselementen zum Bilden einer Befestigungsbasis, auf der die Vielzahl von in dem ersten Installationsschritt (S1304) installierten Stützelementen (20) installiert wird, durch den ersten Öffnungs/Schließ-Teil (8) in das Innere der Wärmerückgewinnungsvorrichtung (10); und
einen Schritt (S1302) des Installierens der Befestigungsbasis unter Verwendung der Vielzahl von Befestigungselementen, die in dem obigen Schritt (S1301) nach innen transportiert werden.

9. Verfahren zur Herstellung einer Wärmerückgewinnungsvorrichtung nach Anspruch 8, wobei die Befestigungsbasis (50, 71) gebildet wird durch Verwenden eines Elements, dessen eine untere Fläche und eine obere Fläche im Querschnitt parallel zueinander sind und das einen vertikalen Teil aufweist, der als Befestigungselement die untere Fläche mit der oberen Fläche verbindet.

10. Verfahren zur Herstellung einer Wärmerückgewinnungsvorrichtung nach einem der Ansprüche 1 bis 9, wobei der erste Öffnungs/Schließ-Teil (8) ein Öffnungs/Schließ-Teil ist, der in der Wärmerückgewinnungsvorrichtung (10) vorinstalliert ist.

11. Verfahren zur Herstellung einer Wärmerückgewinnungsvorrichtung nach einem der Ansprüche 1 bis 10, weiterhin umfassend einen Schritt des Installierens des ersten Öffnungs/Schließ-Teils (8) an einer äußeren Wandfläche der Wärmerückgewinnungsvorrichtung (10).

## Revendications

1. Procédé de fabrication d'un dispositif de récupération de chaleur pour fabriquer le dispositif de récupération de chaleur (10) dans lequel un dispositif de dénitration, qui comprend une pluralité d'éléments catalyseurs (30) pour décomposer des oxydes d'azote, est installé et qui récupère la chaleur d'un gaz contenant des oxydes d'azote, dans lequel le dispositif de récupération de chaleur (10) qui n'est pas équipé du dispositif de dénitration comprend :
une partie de récupération de chaleur (1, 2, 3) pour récupérer la chaleur du gaz ; et
une première partie ouvrante/fermante (8) qui peut être ouverte et fermée pour transporter les éléments catalyseurs (30) depuis un extérieur du dispositif de récupération de chaleur (10) jusqu'à un intérieur du dispositif de récupération de chaleur (10) où la partie de récupération de chaleur (1, 2, 3) est installée, et
le procédé de fabrication comprend :
une première étape de transport vers l'intérieur (S1303) de transport d'une pluralité d'éléments de support (20) distincts pour supporter les éléments catalyseurs (30) à travers la première partie ouvrante/fermante (8) jusqu'à l'intérieur du dispositif de récupération de chaleur (10) ;
une première étape d'installation (S1304) d'installation de la pluralité d'éléments de support (20), qui sont transportés jusqu'à l'intérieur du dispositif de récupération de chaleur (10) dans la première étape de transport vers l'intérieur (S1303), à des positions où la partie de récupération de chaleur (1, 2, 3) n'est pas installée à l'intérieur du dispositif de récupération de chaleur (10) et de jonction des éléments de support (20) adjacents les uns aux autres ;
une deuxième étape de transport vers l'intérieur (S1305) de transport de la pluralité d'éléments catalyseurs (30) à travers la première partie ouvrante/fermante (8) jusqu'à l'intérieur du dispositif de récupération de chaleur (10) ; et
une deuxième étape d'installation (S1306) d'installation de la pluralité d'éléments catalyseurs (30), qui sont transportés jusqu'à l'intérieur du dispositif de récupération de chaleur (10) dans la seconde étape de transport vers l'intérieur (S1305), à des positions sur la pluralité d'éléments de support (20) qui sont installés dans la première étape d'installation (S1304).

2. Procédé de fabrication d'un dispositif de récupération de chaleur selon la revendication 1, dans lequel
le dispositif de récupération de chaleur (10) comprend en outre une seconde partie ouvrante/fermante (9) qui peut être ouverte et fermée pour le transport vers l'intérieur depuis l'extérieur du dispositif de récupération de chaleur (10) jusqu'à l'intérieur du dispositif de récupération de chaleur (10),
la seconde partie ouvrante/fermante (9) est fournie sur un côté d'amont de la première partie ouvrante/fermante (8) dans une direction de circulation du gaz, et
le procédé de fabrication comprend en outre :
une troisième étape de transport vers l'intérieur (S1307) de transport d'une pluralité d'éléments d'insufflation (40), qui insufflent un agent réducteur pour réduire le gaz passant à travers la pluralité d'éléments catalyseurs (30), à travers la seconde partie ouvrante/fermante (9) jusqu'à l'intérieur du dispositif de récupération de chaleur (10) ; et
une troisième étape d'installation (S1308) d'installation de la pluralité d'éléments d'insufflation (40), qui sont transportés jusqu'à l'intérieur du dispositif de récupération de chaleur (10) dans la troisième étape de transport vers l'intérieur (S1307), sur le côté amont de la pluralité d'éléments catalyseurs (30), qui sont installés dans la deuxième étape d'installation (S1306), dans la direction de circulation du gaz.

3. Procédé de fabrication d'un dispositif de récupération de chaleur selon la revendication 1 ou 2, dans lequel
l'élément de support (20) est un élément dont une surface inférieure et une surface supérieure sont parallèles l'une à l'autre en coupe transversale et qui possède une partie verticale connectant la surface inférieure et la surface supérieure,
l'élément catalyseur (20) a une largeur prédéterminée dans une direction de la largeur,
dans la première étape d'installation (S1304), la pluralité d'éléments de support (20) sont installés à des intervalles tels que l'intervalle entre les parties verticales de la pluralité d'éléments de support (20) adjacents les uns aux autres dans la direction de la largeur dans un corps principal du dispositif de récupération de chaleur (10) est égal à la largeur prédéterminée de l'élément catalyseur (30), et
dans la deuxième étape d'installation (S1306), la pluralité d'éléments catalyseurs (30) sont installés de sorte que l'un de la pluralité d'éléments catalyseurs (30) comble l'intervalle entre deux de la pluralité d'éléments de support (20) installés adjacents l'un à l'autre à l'intervalle de la largeur prédéterminée.

4. Procédé de fabrication d'un dispositif de récupération de chaleur selon la revendication 2, dans lequel
la partie de récupération de chaleur (1, 2, 3) comprend : un premier tube de transfert de chaleur (1) ; un deuxième tube de transfert de chaleur (2) installé sur un côté d'amont du premier tube de transfert de chaleur (1) dans la direction de circulation du gaz ; et un troisième tube de transfert de chaleur (3) installé sur un côté d'amont du deuxième tube de transfert de chaleur (2) dans la direction de circulation du gaz,
la première étape de transport vers l'intérieur (S1303) est une étape de transport de la pluralité d'éléments de support (20) jusqu'à l'intérieur du dispositif de récupération de chaleur (10) à travers la première partie ouvrante/fermante (8) fournie à une première position qui est située entre le premier tube de transfert de chaleur (1) et le deuxième tube de transfert de chaleur (2) dans la direction de circulation du gaz,
la première étape d'installation (S1304) est une étape d'installation de la pluralité d'éléments de support (20) à la première position,
la deuxième étape de transport vers l'intérieur (S1305) est une étape de transport de la pluralité d'éléments catalyseurs (30) jusqu'à l'intérieur du dispositif de récupération de chaleur (10) à travers la première partie ouvrante/fermante (8) fournie à la première position,
la deuxième étape d'installation (S1306) est une étape d'installation de la pluralité d'éléments catalyseurs (30) à la première position,
la troisième étape de transport vers l'intérieur (S1307) est une étape de transport de la pluralité d'éléments d'insufflation (40) jusqu'à l'intérieur du dispositif de récupération de chaleur (10) à travers la seconde partie ouvrante/fermante (9) fournie à la seconde position qui est située entre le deuxième tube de transfert de chaleur (2) et le troisième tube de transfert de chaleur (3) dans la direction de circulation du gaz, et
la troisième étape d'installation (S1308) est une étape d'installation de la pluralité d'éléments d'insufflation (40) à la seconde position.

5. Procédé de fabrication d'un dispositif de récupération de chaleur selon la revendication 2 ou 4, dans lequel
la pluralité d'éléments d'insufflation (40) sont des éléments en forme de tuyaux constituant un passage pour faire circuler l'agent réducteur, et
la troisième étape d'installation (S1308) est une étape de formation du passage en connectant la pluralité d'éléments en forme de tuyaux (40).

6. Procédé de fabrication d'un dispositif de récupération de chaleur selon l'une quelconque des revendications 1 à 5, dans lequel le procédé de fabrication installe la pluralité d'éléments catalyseurs (30) en répétant alternativement la première étape de transport vers l'intérieur (S1303) et la première étape d'installation (S1304) réalisées sur un de la pluralité d'éléments de support (20), et la deuxième étape de transport vers l'intérieur (S1305) et la deuxième étape d'installation (S1306) réalisées sur un de la pluralité d'éléments catalyseurs (30).

7. Procédé de fabrication d'un dispositif de récupération de chaleur selon l'une quelconque des revendications 1 à 6, dans lequel, pour permettre au gaz de circuler à l'intérieur du dispositif de récupération de chaleur (10) depuis le côté inférieur jusqu'au côté supérieur, la première étape d'installation (S1304) est une étape d'installation de la pluralité d'éléments de support (20) sur un plan perpendiculaire à la direction de circulation du gaz, et
la deuxième étape d'installation (S1306) est une étape d'installation de la pluralité d'éléments catalyseurs (30) sur un plan perpendiculaire à la direction de circulation du gaz.

8. Procédé de fabrication d'un dispositif de récupération de chaleur selon l'une quelconque des revendications 1 à 7, dans lequel le procédé de fabrication comprend en outre :
une étape (S1301) de transport d'une pluralité d'éléments de montage pour constituer une base de montage, sur laquelle la pluralité d'éléments de support (20) installés dans la première étape d'installation (S1304) sont installés, à travers la première partie ouvrante/fermante (8) à l'intérieur du dispositif de récupération de chaleur (10) ; et
une étape (S1302) d'installation de la base de montage en utilisant la pluralité d'éléments de montage qui sont transportés jusqu'à l'intérieur dans l'étape (S1301) ci-dessus.

9. Procédé de fabrication d'un dispositif de récupération de chaleur selon la revendication 8, dans lequel la base de montage (50, 71) est constituée en utilisant un élément, dont une surface inférieure et une surface supérieure sont parallèles l'une à l'autre en coupe transversale et qui possède une partie verticale connectant la surface inférieure et la surface supérieure, en tant que l'élément de montage.

10. Procédé de fabrication d'un dispositif de récupération de chaleur selon l'une quelconque des revendications 1 à 9, dans lequel la première partie ouvrante/fermante (8) est une partie ouvrante/fermante qui est préinstallée dans le dispositif de récupération de chaleur (10).

11. Procédé de fabrication d'un dispositif de récupération de chaleur selon l'une quelconque des revendications 1 à 10, comprenant en outre une étape d'installation de la première partie ouvrante/fermante (8) sur une surface de paroi extérieure du dispositif de récupération de chaleur (10).
